(19) Europäisches Patentamt / European Patent Office / Office européen des brevets

(11) **EP 4 053 748 B1**

(12) **EUROPEAN PATENT SPECIFICATION**

(45) Date of publication and mention
of the grant of the patent:
**30.07.2025 Bulletin 2025/31**

(21) Application number: **20888862.8**

(22) Date of filing: **20.11.2020**

(51) International Patent Classification (IPC):
$G06N\ 3/065$ (2023.01)    $G06N\ 3/0464$ (2023.01)
$G06N\ 3/09$ (2023.01)    $G06N\ 3/084$ (2023.01)

(52) Cooperative Patent Classification (CPC):
**G06N 3/084; G06N 3/0464; G06N 3/065;
G06N 3/09**

(86) International application number:
**PCT/CN2020/130393**

(87) International publication number:
**WO 2021/098821 (27.05.2021 Gazette 2021/21)**

(54) **METHOD FOR DATA PROCESSING IN NEURAL NETWORK SYSTEM, AND NEURAL NETWORK SYSTEM**

VERFAHREN ZUR DATENVERARBEITUNG IN EINEM NEURONALEN NETZWERKSYSTEM UND NEURONALES NETZWERKSYSTEM

PROCÉDÉ DE TRAITEMENT DE DONNÉES DANS UN SYSTÈME DE RÉSEAU NEURONAL, ET SYSTÈME DE RÉSEAU NEURONAL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **20.11.2019  CN 201911144635**

(43) Date of publication of application:
**07.09.2022  Bulletin 2022/36**

(73) Proprietors:
• **Huawei Technologies Co., Ltd.
Shenzhen, Guangdong 518129 (CN)**
• **Tsinghua University
Beijing 100084 (CN)**

(72) Inventors:
• **GAO, Bin
Beijing 100084 (CN)**
• **YAO, Peng
Beijing 100084 (CN)**
• **WANG, Kanwen
Shenzhen, Guangdong 518129 (CN)**
• **LIAO, Jianxing
Shenzhen, Guangdong 518129 (CN)**
• **WANG, Tieying
Shenzhen, Guangdong 518129 (CN)**
• **WU, Huaqiang
Beijing 100084 (CN)**

(74) Representative: **Thun, Clemens et al
Mitscherlich PartmbB
Patent- und Rechtsanwälte
Karlstraße 7
80333 München (DE)**

(56) References cited:
WO-A1-2019/082077    CN-A- 108 009 640
CN-A- 109 460 817    CN-A- 109 886 393
CN-A- 110 443 168    US-B1- 9 646 243

• WANG ZHONGRUI ET AL: "In situ training of feed-forward and recurrent convolutional memristor networks", NATURE MACHINE INTELLIGENCE, vol. 1, no. 9, 1 September 2019 (2019-09-01), pages 434 - 442, XP093002909, Retrieved from the Internet <URL:http://www.nature.com/articles/s42256-019-0089-1> DOI: 10.1038/s42256-019-0089-1

- **YAKOPCIC CHRIS ET AL: "Extremely parallel memristor crossbar architecture for convolutional neural network implementation", 2017 INTERNATIONAL JOINT CONFERENCE ON NEURAL NETWORKS (IJCNN), IEEE, 14 May 2017 (2017-05-14), pages 1696 - 1703, XP033112253, DOI: 10.1109/IJCNN.2017.7966055**

**Description**

**TECHNICAL FIELD**

This application relates to the field of neural networks, and more specifically, to a method for data processing in a neural network system and a neural network system.

**BACKGROUND**

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and achieve an optimal result by using the knowledge. In other words, artificial intelligence is a branch of computer science, and seeks to learn essence of intelligence and produce a new intelligent machine that can react in a way similar to artificial intelligence. Artificial intelligence is to study design principles and implementation methods of various intelligent machines, so that the machines have perceiving, inference, and decision-making functions. Researches in the field of artificial intelligence include robots, natural language processing, computer vision, decision-making and inference, human-machine interaction, recommendation and search, AI basic theories, and the like.

In the AI field, deep learning is a learning technology based on a deep artificial neural network (artificial neural network, ANN) algorithm. A training process of a neural network is a data-centric task, and requires computing hardware to have a processing capability with high performance and low power consumption.

A neural network system based on a plurality of neural network arrays may implement in-memory computing, and may process a deep learning task. For example, at least one in-memory computing unit in the neural network arrays may store a weight value of a corresponding neural network layer. Due to a network structure or system architecture design, processing speeds of the neural network arrays may be inconsistent. In this case, a plurality of neural network arrays may be used to perform parallel processing, and perform joint computing to accelerate the neural network arrays at speed bottlenecks. However, due to some non-ideal characteristics of in-memory computing units in neural network arrays participating in parallel acceleration, such as component fluctuation, conductance drift, and an array yield rate, overall performance of the neural network system is reduced, and accuracy of the neural network system is relatively low.

Wang Zhongrui ET AL: "In situ training of feed-forward and recurrent convolutional memristor networks", Nature Machine Intelligence, vol. 1, no. 9, 1 September 2019 (2019-09-01), pages 434-442, DOI: 10.1038/s42256-019-0089-1, discloses the in situ training of a five-level convolutional neural network that self-adapts to non-idealities of the one-transistor one-memristor array to classify the MNIST dataset.

YAKOPCIC CHRIS ET AL: "Extremely parallel memristor crossbar architecture for convolutional neural network implementation", 2017 INTERNATIONAL JOINT CONFERENCE ON NEURAL NETWORKS (IJCNN), IEEE, 14 May 2017 (2017-05-14), pages 1696-1703, DOI: 10. 1109/IJCNN.2017.7966055. discloses a simulated memristor crossbar based Convolutional Neural Network (CNN).

**SUMMARY**

The present invention is defined by the independent claims. Further advantageous developments are shown by the dependent claims.

This application provides a method for data processing in a neural network system using parallel acceleration and a neural network system, to resolve impact caused by a non-ideal characteristic of a component when a parallel acceleration technology is used, and improve performance and recognition accuracy of the neural network system.

According to a first aspect, a method for data processing in a neural network system is provided, including: in a neural network system using parallel acceleration, inputting training data into the neural network system to obtain first output data, where the neural network system includes a plurality of neural network arrays, each of the plurality of neural network arrays includes a plurality of in-memory computing units, and each in-memory computing unit is configured to store a weight value of a neuron in a corresponding neural network; calculating a deviation between the first output data and target output data; and adjusting, based on the deviation, a weight value stored in at least one in-memory computing unit in some neural network arrays in the plurality of neural network arrays, where the some neural network arrays are configured to implement computing of some neural network layers in the neural network system.

In the foregoing technical solution, a weight value stored in an in-memory computing unit in some neural network arrays in the plurality of neural network arrays may be adjusted and updated based on a deviation between actual output data of the neural network arrays and the target output data, so that compatibility with a non-ideal characteristic of the in-memory computing unit may be implemented, to improve a recognition rate and performance of the system, thereby avoiding degradation of the system performance caused by the non-ideal characteristic of the in-memory computing unit.

In a possible implementation of the first aspect, the plurality of neural network arrays include a first neural network array and a second neural network array, and input data of the first neural network array includes output data of the second neural network array.

In another possible implementation of the first aspect, the first neural network array includes a neural network array configured to implement computing of a fully-connected layer in the neural network.

In the foregoing technical solution, a weight value stored in an in-memory computing unit in the neural network array that implements computing of the fully-connected layer may be adjusted and updated, so that compatibility with a non-ideal characteristic of the in-memory computing unit may be implemented, to improve a recognition rate and performance of the system. The solution is effective and easy to implement with relatively low costs.

In another possible implementation of the first aspect, a weight value stored in at least one in-memory computing unit in the first neural network array is adjusted based on input data of the first neural network array and the deviation.

In another possible implementation of the first aspect, the plurality of neural network arrays further include a third neural network array, and the third neural network array and the second neural network array are configured to implement computing of a convolutional layer in the neural network in parallel.

In another possible implementation of the first aspect, a weight value stored in at least one in-memory computing unit in the second neural network array is adjusted based on input data of the second neural network array and the deviation, and a weight value stored in at least one in-memory computing unit in the third neural network array is adjusted based on input data of the third neural network array and the deviation.

In the foregoing technical solution, weight values stored in in-memory computing units in a plurality of neural network arrays that implement computing of the convolutional layer in the neural network in parallel may alternatively be adjusted and updated, to improve adjustment precision, thereby improving accuracy of output of the neural network system.

In another possible implementation of the first aspect, the deviation is divided into at least two sub-deviations, where a first sub-deviation in the at least two sub-deviations corresponds to the output data of the second neural network array, and a second sub-deviation in the at least two sub-deviations corresponds to output data of the third neural network array; a weight value stored in at least one in-memory computing unit in the second neural network array is adjusted based on the first sub-deviation and input data of the second neural network array; and a weight value stored in at least one in-memory computing unit in the third neural network array is adjusted based on the second sub-deviation and input data of the third neural network array.

In another possible implementation of the first aspect, a quantity of pulses is determined based on an updated weight value in the in-memory computing unit, and the weight value stored in the at least one in-memory computing unit in the neural network array is rewritten based on the quantity of pulses.

According to a second aspect, a neural network system is provided, including:

a processing module, configured to input training data into the neural network system to obtain first output data, where the neural network system includes a plurality of neural network arrays, each of the plurality of neural network arrays includes a plurality of in-memory computing units, and each in-memory computing unit is configured to store a weight value of a neuron in a corresponding neural network;

a calculation module, configured to calculate a deviation between the first output data and target output data; and

an adjustment module, configured to adjust, based on the deviation, a weight value stored in at least one in-memory computing unit in some neural network arrays in the plurality of neural network arrays, where the some neural network arrays are configured to implement computing of some neural network layers in the neural network system.

In a possible implementation of the second aspect, the plurality of neural network arrays include a first neural network array and a second neural network array, and input data of the first neural network array includes output data of the second neural network array.

In another possible implementation of the second aspect, the first neural network array includes a neural network array configured to implement computing of a fully-connected layer in the neural network.

In another possible implementation of the second aspect, the adjustment module is specifically configured to: adjust, based on input data of the first neural network array and the deviation, a weight value stored in at least one in-memory computing unit in the first neural network array.

In another possible implementation of the second aspect, the plurality of neural network arrays further include a third neural network array, and the third neural network array and the second neural network array are configured to implement computing of a convolutional layer in the neural network in parallel.

In another possible implementation of the second aspect, the adjustment module is specifically configured to: adjust, based on input data of the second neural network array and the deviation, a weight value stored in at least one in-memory computing unit in the second neural network array; and adjust, based on input data of the third neural network array and the deviation, a weight value stored in at least one in-memory computing unit in the third neural network array.

In another possible implementation of the second aspect, the adjustment module is specifically configured to:

divide the deviation into at least two sub-deviations, where a first sub-deviation in the at least two sub-deviations corresponds to the output data of the second neural network array, and a second sub-deviation in the at least two sub-deviations corresponds to output data of the third neural network array;
adjust, based on the first sub-deviation and input data of the second neural network array, a weight value stored in at least one in-memory computing unit in the second neural network array; and
adjust, based on the second sub-deviation and input data of the third neural network array, a weight value stored in at least one in-memory computing unit in the third neural network array.

In another possible implementation of the second aspect, the adjustment module is specifically configured to determine a quantity of pulses based on an updated weight value in the in-memory computing unit, and rewrite, based on the quantity of pulses, the weight value stored in the at least one in-memory computing unit in the neural network array.

Beneficial effects of the second aspect and any possible implementation of the second aspect are corresponding to beneficial effects of the first aspect and any possible implementation of the first aspect. Details are not described herein again.

According to a third aspect, a neural network system is provided, including a processor and a memory. The memory is configured to store a computer program, and the processor is configured to invoke and run the computer program from the memory, so that the neural network system performs the method provided in any one of the first aspect or the possible implementations of the first aspect.

Optionally, during specific implementation, a quantity of processors is not limited. The processor may be a general-purpose processor, and may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a fourth aspect, a chip is provided, and the neural network system according to any one of the second aspect or the possible implementations of the second aspect is disposed on the chip.

The chip includes a processor and a data interface, and the processor reads, by using the data interface, instructions stored in a memory, to perform the method in any one of the first aspect or the possible implementations of the first aspect. In a specific implementation process, the chip may be implemented in a form of a central processing unit (central processing unit, CPU), a micro controller unit (micro controller unit, MCU), a micro processing unit (micro processing unit, MPU), a digital signal processor (digital signal processing, DSP), a system-on-a-chip (system on chip, SoC), an application-specific integrated circuit (application-specific integrated circuit, ASIC), a field programmable gate array (field programmable gate array, FPGA), or a programmable logic device (programmable logic device, PLD).

According to a fifth aspect, a computer program product is provided. The computer program product includes computer program code. When the computer program code is run on a computer, the computer is enabled to perform the method in any one of the first aspect or the possible implementations of the first aspect.

According to a sixth aspect, a computer-readable storage medium is provided. The computer-readable storage medium stores computer program code. When the computer program code is run on a computer, the computer is enabled to perform the method in any one of the first aspect or the possible implementations of the first aspect. The computer-readable storage includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard drive (hard drive).

## BRIEF DESCRIPTION OF DRAWINGS

FIG. 1 is a schematic diagram of a structure of a neural network system 100 according to this application;
FIG. 2 is a schematic diagram of a structure of another neural network system 200 according to this application;
FIG. 3 is a schematic diagram of a mapping relationship between a neural network and a neural network array;
FIG. 4 is a schematic diagram of a possible weight matrix according to this application;
FIG. 5 is a schematic diagram of a possible neural network model;
FIG. 6 is a schematic diagram of a neural network system according to this application;
FIG. 7 is a schematic diagram of a structure of input data and output data of a plurality of memristor arrays for parallel computing according to this application;
FIG. 8(a) is a plurality of memristor arrays for performing accelerated parallel computing on input data according to this application;
FIG. 8(b) is a schematic diagram of specific data splitting according to this application;
FIG. 9 is a plurality of other memristor arrays for performing accelerated parallel computing on input data according to this application;
FIG. 10 is a schematic flowchart of a method for data processing in a neural network system according to this application;
FIG. 11 is a schematic diagram of a forward operation process and a backward operation process according to this application;
FIG. 12A and FIG. 12B are a schematic diagram of updating a weight value stored in a first memristor array for implementing computing of a fully-connected layer in a plurality of memristor arrays according to this application;
FIG. 13A and FIG. 13B are another schematic diagram of updating a weight value stored in a first memristor array for implementing computing of a fully-connected layer in a plurality of memristor arrays according to this application;
FIG. 14 is a schematic diagram of updating weight values stored in a plurality of memristor arrays for implementing computing of a convolutional layer;
FIG. 15 is a schematic diagram of updating, based on a residual value, weight values stored in a plurality of memristor arrays for implementing computing of a convolutional layer;
FIG. 16 is another schematic diagram of updating weight values stored in a plurality of memristor arrays for implementing computing of a convolutional layer;
FIG. 17 is another schematic diagram of updating, based on a residual value, weight values stored in a plurality of memristor arrays for implementing computing of a convolutional layer;
FIG. 18 is a schematic diagram of increasing a weight value stored in at least one in-memory computing unit in a neural network array according to this application;
FIG. 19 is a schematic diagram of reducing a weight value stored in at least one in-memory computing unit in a neural network array according to this application;
FIG. 20 is a schematic diagram of increasing, in a read-while-write manner, a weight value stored in at least one in-memory computing unit in a neural network array according to this application;
FIG. 21 is a schematic diagram of reducing, in a read-while-write manner, a weight value stored in at least one in-memory computing unit in a neural network array according to this application;
FIG. 22 is a schematic flowchart of a training process of a neural network according to an embodiment of this application; and
FIG. 23 is a schematic diagram of a structure of a neural network system 2300 according to an embodiment of this application.

## DESCRIPTION OF EMBODIMENTS

The following describes technical solutions of this application with reference to accompanying drawings.

Artificial intelligence (artificial intelligence, AI) is a theory, a method, a technology, or an application system that simulates, extends, and expands human intelligence by using a digital computer or a machine controlled by a digital computer, to sense an environment, obtain knowledge, and achieve an optimal result by using the knowledge. In other words, artificial intelligence is a branch of computer science, and seeks to learn essence of intelligence and produce a new intelligent machine that can react in a way similar to artificial intelligence. Artificial intelligence is to study design principles and implementation methods of various intelligent machines, so that the machines have perceiving, inference, and decision-making functions. Researches in the field of artificial intelligence include robots, natural language processing, computer vision, decision-making and inference, human-machine interaction, recommendation and search, AI basic theories, and the like.

In the AI field, deep learning is a learning technology based on a deep artificial neural network (artificial neural network, ANN) algorithm. An artificial neural network (artificial neural network, ANN) is referred to as a neural network (neural network, NN) or a quasi-neural network for short. In the machine learning and cognitive science fields, the artificial neural network is a mathematical model or a computing model that simulates a structure and a function of a biological neural network (a central nervous system of an animal, especially a brain), and is used to estimate or approximate a function. The artificial neural network may include a convolutional neural network (convolutional neural network, CNN), a multilayer perceptron (multilayer perceptron, MLP), a recurrent neural network (recurrent neural network, RNN), and the like.

A training process of a neural network is also a process of learning a parameter matrix, and a final purpose is to obtain a parameter matrix of each layer of neurons in a trained neural network (the parameter matrix of each layer of neurons includes a weight corresponding to each neuron included in the layer of neurons). Each parameter matrix including weights obtained through training may extract pixel information from a to-be-inferred image input by a user, to help the neural network perform correct inference on the to-be-inferred image, so that a predicted value output by the trained neural network is as close as possible to prior knowledge (prior knowledge) of training data.

It should be understood that the prior knowledge is also referred to as a ground truth (ground truth), and generally includes a true result corresponding to the training data provided by the user.

The training process of the neural network is a data-centric task, and requires computing hardware to have a processing capability with high performance and low power consumption. Because a storage unit and a computing unit are separated in computing based on a conventional Von Neumann architecture, a large amount of data needs to be moved, and energy-efficient processing cannot be implemented.

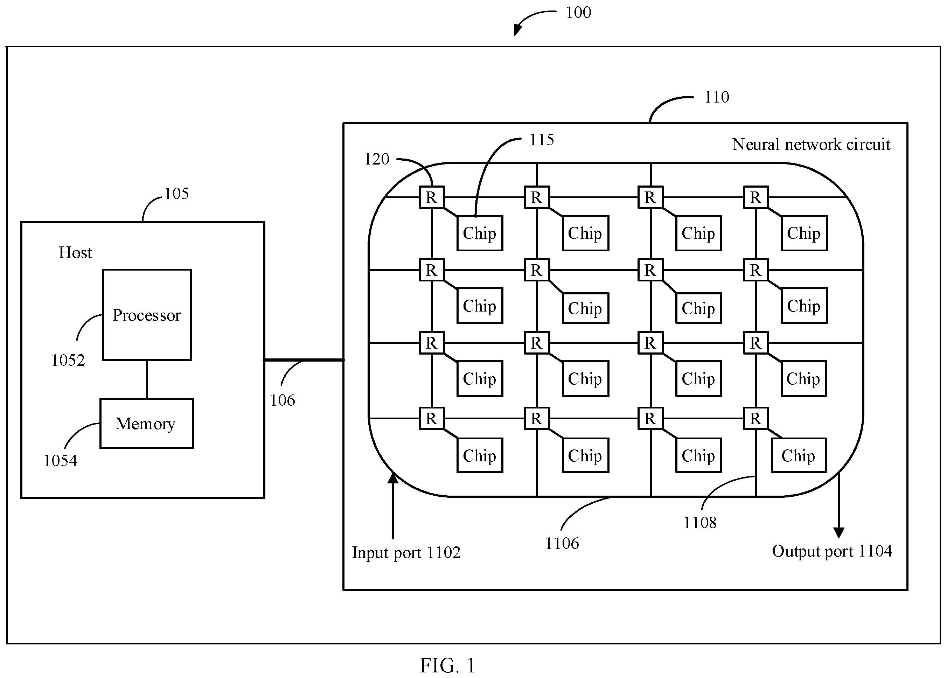

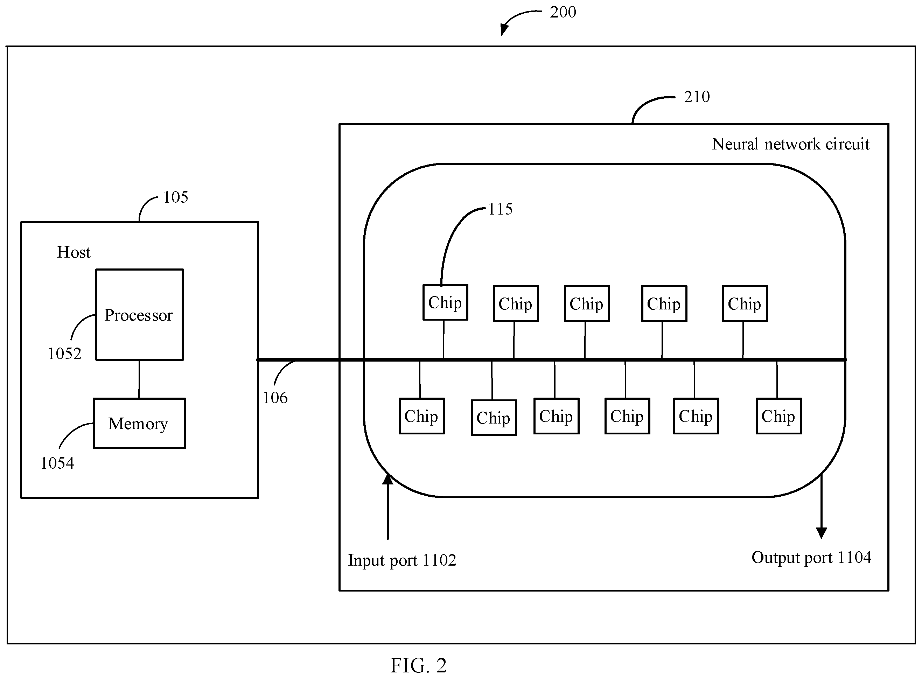

The following describes a system architectural diagram of this application with reference to FIG. 1 and FIG. 2.

FIG. 1 is a schematic diagram of a structure of a neural network system 100 according to an embodiment of this application. As shown in FIG. 1, the neural network system 100 may include a host 105 and a neural network circuit 110.

The neural network circuit 110 is connected to the host 105 by using a host interface. The host interface may include a standard host interface and a network interface (network interface). For example, the host interface may include a peripheral component interconnect express (peripheral component interconnect express, PCIe) interface.

In an example, as shown in FIG. 1, the neural network circuit 110 may be connected to the host 105 by using a PCIe bus 106. Therefore, data is input into the neural network circuit 110 by using the PCIe bus 106, and data processed by the neural network circuit 110 is received by using the PCIe bus 106. In addition, the host 105 may further monitor a working status of the neural network circuit 110 by using the host interface.

The host 105 may include a processor 1052 and a memory 1054. It should be noted that, in addition to the components shown in FIG. 1, the host 105 may further include other components such as a communications interface and a magnetic disk used as an external memory. This is not limited herein.

The processor (processor) 1052 is an operation unit and a control unit (control unit) of the host 105. The processor 1052 may include a plurality of processor cores (core). The processor 1052 may be an integrated circuit with an ultra-large scale. An operating system and another software program are installed in the processor 1052, so that the processor 1052 can access the memory 1054, a cache, a magnetic disk, and a peripheral device (for example, the neural network circuit in FIG. 1). It may be understood that, in this embodiment of this application, the core of the processor 1052 may be, for example, a central processing unit (central processing unit, CPU) or another application-specific integrated circuit (application-specific integrated circuit, ASIC).

It should be understood that the processor 1052 in this embodiment of this application may alternatively be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor, or the like.

The memory 1054 is a main memory of the host 105. The memory 1054 is connected to the processor 1052 by using a double data rate (double data rate, DDR) bus. The memory 1054 is usually configured to store various software running in the operating system, input data and output data, information exchanged with an external memory, and the like. To improve an access rate of the processor 1052, the memory 1054 needs to have an advantage of a high access rate. In a conventional computer system architecture, a dynamic random access memory (dynamic random access memory, DRAM) is usually used as the memory 1054. The processor 1052 can access the memory 1054 at a high rate by using a memory controller (not shown in FIG. 1), and perform a read operation and a write operation on any storage unit in the memory 1054.

It should be further understood that the memory 1054 in this embodiment of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through an example rather than limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

The neural network circuit 110 shown in FIG. 1 may be a chip array including a plurality of neural network chips (chip) and a plurality of routers 120. For ease of description, a neural network chip 115 is referred to as a chip 115 for short in this embodiment of this application. The plurality of chips 115 are connected to each other by using the routers 120. For example, one chip 115 may be connected to one or more routers 120. The plurality of routers 120 may form one or more network topologies. Data transmission and information exchange may be performed between the chips 115 by using the plurality of network topologies.

FIG. 2 is a schematic diagram of a structure of another neural network system 200 according to an embodiment of this application. As shown in FIG. 2, the neural network system 200 may include a host 105 and a neural network circuit 210.

The neural network circuit 210 is connected to the host 105 by using a host interface. As shown in FIG. 2, the neural network circuit 210 may be connected to the host 105 by using a PCIe bus 106. The host 105 may include a processor 1052 and a memory 1054. For a specific description of the host 105, refer to the description in FIG. 1. Details are not described herein.

The neural network circuit 210 shown in FIG. 2 may be a chip array including a plurality of chips 115, and the plurality of chips 115 are attached to the PCIe bus 106. Data transmission and information exchange are performed between the chips 115 by using the PCIe bus 106.

Optionally, the architectures of the neural network systems in FIG. 1 and FIG. 2 are merely examples. A person skilled in the art can understand that, in practice, the neural network system may include more or fewer units than those in FIG. 1 or FIG. 2. Alternatively, a module, a unit, or a circuit in the neural network system may be replaced by another module, unit, or circuit having a similar function. This is not limited in this embodiment of this application. For example, in some other examples, the neural network system may alternatively be implemented by a digital computing-based graphics processing unit (graphics processing unit, GPU) or field programmable gate array (field programmable gate array, FPGA).

In some examples, the neural network circuit may be implemented by a plurality of neural network matrices that implement in-memory computing. Each of the plurality of neural network matrices may include a plurality of in-memory computing units, and each in-memory computing unit is configured to store a weight value of each layer of neurons in a corresponding neural network, to implement computing of a neural network layer.

The in-memory computing unit is not specifically limited in this embodiment of this application, and may include but is not limited to a memristor (memristor), a static RAM (static RAM, SRAM), a NOR flash, a magnetic RAM (magnetic RAM, MRAM), a ferroelectric gate field-effect transistor (ferroelectric gate field-effect transistors, FeFET), and an electrochemical RAM (electrochemical RAM, ECRAM). The memristor may include but is not limited to a resistive random-access memory (resistive random-access memory, ReRAM), a conductive-bridging RAM (conductive-bridging RAM, CBRAM), and a phase-change memory (phase-change memory, PCM).

For example, the neural network matrix is a ReRAM crossbar (ReRAM crossbar) including ReRAMs. The neural network system may include a plurality of ReRAM crossbars.

In this embodiment of this application, the ReRAM crossbar may also be referred to as a memristor cross array, a ReRAM component, or a ReRAM. A chip including one or more ReRAM crossbars may be referred to as a ReRAM chip.

The ReRAM crossbar is a radically new non-Von Neumann computing architecture. The architecture integrates storage and computing functions, has a flexible configurable feature, and uses an analog computing manner. The architecture is expected to implement matrix-vector multiplication with a higher speed and lower energy consumption than a conventional computing architecture, and has a wide application prospect in neural network computing.

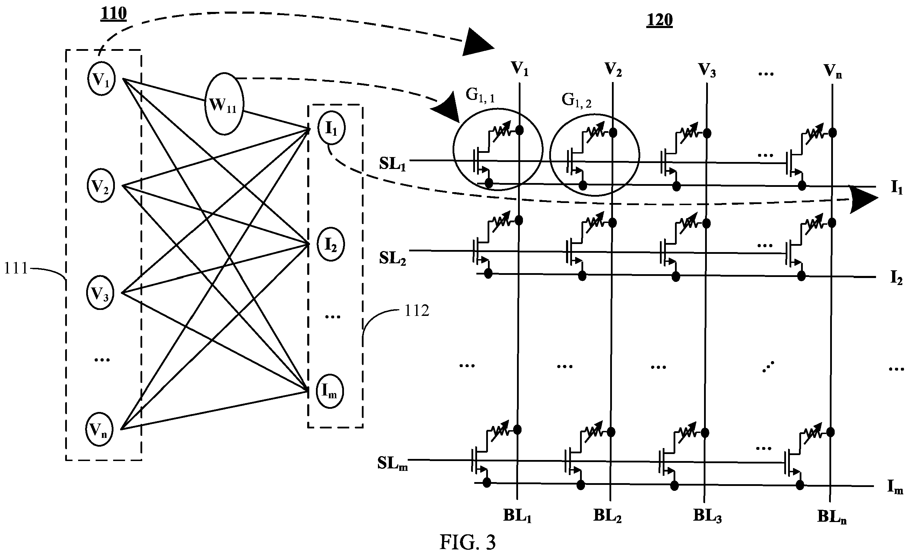

With reference to FIG. 3, the following uses an example in which a neural network array is a ReRAM crossbar to describe in detail a specific implementation process of implementing computing of a neural network layer by using the ReRAM crossbar.

FIG. 3 is a schematic diagram of a mapping relationship between a neural network and a neural network array. The neural network 110 includes a plurality of neural network layers.

In this embodiment of this application, the neural network layer is a logical layer concept, and one neural network layer means that one neural network operation needs to be performed. Computing of each neural network layer is implemented by a computing node (which may also be referred to as a neuron). In actual application, the neural network layer may include a convolutional layer, a pooling layer, a fully-connected layer, and the like.

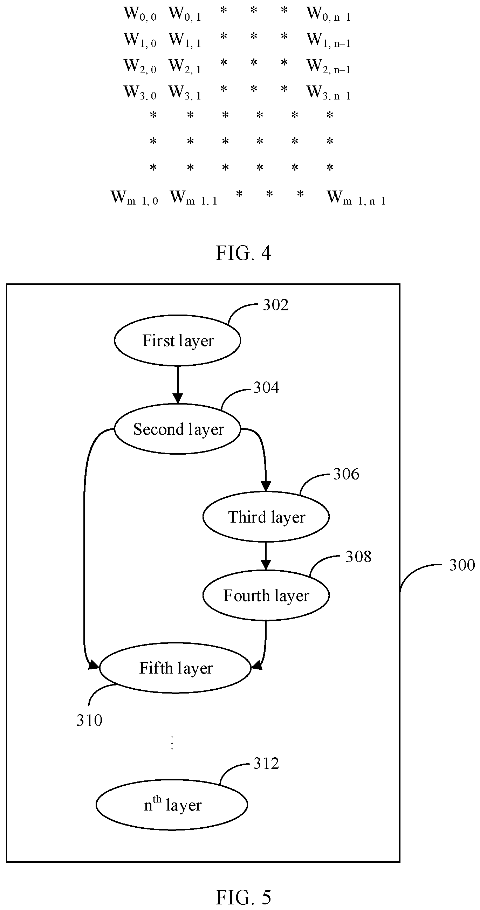

A person skilled in the art knows that when neural network computing (for example, convolution computing) is performed, a computing node in a neural network system may compute input data and a weight of a corresponding neural network layer. In the neural network system, a weight is usually represented by a real number matrix, and each element in a weight matrix represents a weight value. The weight is usually used to indicate importance of input data to output data. As shown in FIG. 4, a weight matrix of m rows and n columns shown in FIG. 4 may be a weight of a neural network layer, and each element in the weight matrix represents a weight value.

Computing of each neural network layer may be implemented by the ReRAM crossbar, and the ReRAM has an advantage of in-memory computing. Therefore, the weight may be configured on a plurality of ReRAM cells (cell) of the ReRAM crossbar before computing. Therefore, a matrix multiply-add operation of input data and the configured weight may be implemented by using the ReRAM crossbar.

It should be understood that the ReRAM cell in this embodiment of this application may also be referred to as a memristor cell. Configuring the weight on the memristor cell before computing may be understood as storing, in the memristor cell, a weight value of a neuron in a corresponding neural network. Specifically, the weight value of the neuron in the neural network may be indicated by using a resistance value or a conductance value of the memristor cell.

It should be further understood that, in actual application, there may be a one-to-one mapping relationship or a one-to-many mapping relationship between the ReRAM crossbar and the neural network layer. The following provides a detailed description with reference to the accompanying drawings, and details are not described herein.

For clarity of description, the following briefly describes a process in which the ReRAM crossbar implements the matrix multiply-add operation.

It should be noted that, in FIG. 3, a data processing process is described by using a first neural network layer in the neural network 110 as an example. In the neural network system, the first neural network layer may be any layer in the neural network system. For ease of description, the first neural network layer may be referred to as a "first layer" for short.

A ReRAM crossbar 120 shown in FIG. 3 is a $m \times n$ cross array. The ReRAM crossbar 120 may include a plurality of memristor cells (for example, $G_{1, 1}$, $G_{1, 2}$, and the like), bit lines (bit line, BL) of memristor cells in each column are connected together, and source lines (source line, SL) of memristor cells in each row are connected together.

In this embodiment of this application, a weight of a neuron in the neural network may be represented by using a conductance value of a memristor. Specifically, in an example, each element in the weight matrix shown in FIG. 4 may be represented by using a conductance value of a memristor located at an intersection of a BL and an SL. For example, $G_{1, 1}$ in FIG. 3 represents a weight element $W_{0, 0}$ in FIG. 4, and $G_{1, 2}$ in FIG. 3 represents a weight element $W_{0, 1}$ in FIG. 4.

Different conductance values of memristor cells may indicate different weights that are of neurons in the neural network and that are stored by the memristor cells.

In a process of performing neural network computing, n pieces of input data $V_i$ may be represented by using voltage values loaded to BLs of the memristor, for example, $V_1$, $V_2$, $V_3$, ..., and $V_n$ in FIG. 3. The input data may be represented by using a voltage, so that a point multiplication operation may be performed on the input data loaded to the memristor and the weight value stored in the memristor, to obtain m pieces of output data shown in FIG. 3. The m pieces of output data may be represented by using currents of SLs, for example, $I_1$, $I_2$, ..., and $I_m$ in FIG. 3.

It should be understood that there are a plurality of implementations for the voltage values loaded to the memristor. This is not specifically limited in this embodiment of this application. For example, the voltage value may be represented by using a voltage pulse amplitude. For another example, the voltage value may alternatively be represented by using a voltage pulse width. For another example, the voltage value may alternatively be represented by using a voltage pulse quantity. For another example, the voltage value may alternatively be represented by using a combination of a voltage pulse quantity and a voltage pulse amplitude.

It should be noted that the foregoing uses one neural network array as an example to describe in detail a process in which the neural network array completes corresponding multiply-accumulate computing in the neural network. In actual application, multiply-accumulate computing required by a complete neural network is jointly completed by a plurality of neural network arrays.

One neural network array in the plurality of neural network arrays may correspond to one neural network layer, and the neural network array is configured to implement computing of the one neural network layer. Alternatively, the plurality of neural network arrays may correspond to one neural network layer, and are configured to implement computing of the one neural network layer. Alternatively, one neural network array in the plurality of neural network arrays may correspond to a plurality of neural network layers, and is configured to implement computing of the plurality of neural network arrays.

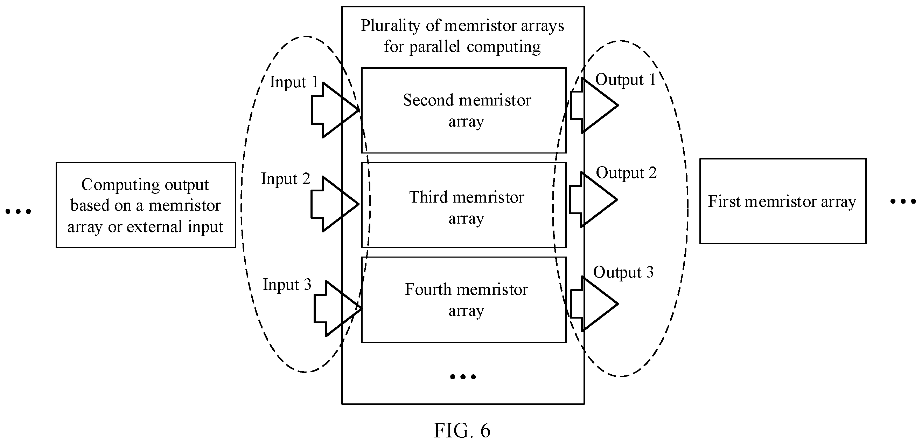

With reference to FIG. 5 and FIG. 6, the following describes a correspondence between a neural network array and a neural network layer in detail.

For ease of description, an example in which a memristor array is a neural network array is used for description below.

FIG. 5 is a schematic diagram of a possible neural network model. The neural network model may include a plurality of neural network layers.

In this embodiment of this application, the neural network layer is a logical layer concept, and one neural network layer means that one neural network operation needs to be performed. Computing of each neural network layer is implemented by a computing node. The neural network layer may include a convolutional layer, a pooling layer, a fully-connected layer, and the like.

As shown in FIG. 5, the neural network model may include n neural network layers (which may also be referred to as an n-layer neural network), where n is an integer greater than or equal to 2. FIG. 5 shows some neural network layers in the neural network model. As shown in FIG. 5, the neural network model may include a first layer 302, a second layer 304, a third layer 306, a fourth layer 308, and a fifth layer 310 to an $n^{th}$ layer 312. The first layer 302 may perform a convolution operation, the second layer 304 may perform a pooling operation or an activation operation on output data of the first layer 302, the third layer 306 may perform a convolution operation on output data of the second layer 304, the fourth layer 308 may perform a convolution operation on an output result of the third layer 306, and the fifth layer 310 may perform a summation operation on the output data of the second layer 304 and output data of the fourth layer 308. The $n^{th}$ layer 312 may perform an operation of the fully-connected layer.

It should be understood that the pooling operation or the activation operation may be implemented by an external digital circuit module. Specifically, the external digital circuit module (not shown in FIG. 1 or FIG. 2) may be connected to the neural network circuit 110 by using the PCIe bus 106.

It may be understood that FIG. 5 shows only a simple example and description of neural network layers in a neural network system, and a specific operation of each neural network layer is not limited. For example, the fourth layer 308 may perform a pooling operation, and the fifth layer 310 may perform another neural network operation such as a convolution operation or a pooling operation.

FIG. 6 is a schematic diagram of a neural network system according to an embodiment of this application. As shown in FIG. 6, the neural network system may include a plurality of memristor arrays, for example, a first memristor array, a second memristor array, a third memristor array, and a fourth memristor array.

The first memristor array may implement computing of a fully-connected layer in a neural network. Specifically, a weight of the fully-connected layer in the neural network may be stored in the first memristor array, and a conductance value of each memristor cell in the memristor array may be used to indicate the weight of the fully-connected layer and implement a multiply-accumulate computing process of the fully-connected layer in the neural network.

It should be noted that the fully-connected layer in the neural network may alternatively correspond to a plurality of memristor arrays, and the plurality of memristor arrays jointly complete computing of the fully-connected layer. This is not specifically limited in this application.

A plurality of memristor arrays (for example, the second memristor array, the third memristor array, and the fourth memristor array) shown in FIG. 6 may implement computing of a convolutional layer in the neural network. For an operation of the convolutional layer, there is new input after each sliding window of a convolution kernel. As a result, different input needs to be processed in a complete computing process of the convolutional layer. Therefore, a parallelism degree of the neural network at a network system level may be increased, and a weight of a same position in the network may be implemented by using a plurality of memristor arrays, thereby implementing parallel acceleration for different input. That is, a convolutional weight of a key position is implemented by using a plurality of memristor arrays. During computing, the memristor arrays (for example, the second memristor array, the third memristor array, and the fourth memristor array) process different input data in parallel and work in parallel with each other, thereby improving convolution computing efficiency and system performance.

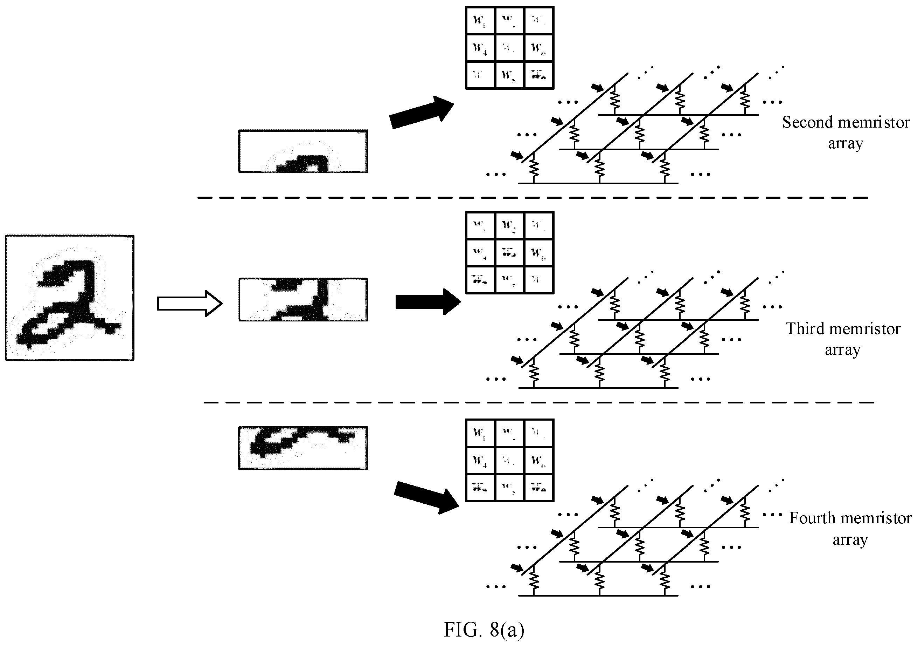

It should be understood that a convolution kernel (kernel) represents a feature extraction manner in a neural network computing process. For example, when image processing is performed in the neural network system, an input image is given, and each pixel in an output image is weighted averaging of pixels in a small area of the input image. A weighted value is defined by a function, and the function is referred to as the convolution kernel. In the computing process, the convolution kernel successively sweeps an input feature map (feature map) based on a specific stride (stride), to generate output data (also referred to as an output feature map) after feature extraction. Therefore, a convolution kernel size (kernel size) is also used to indicate a size of a data volume for which a computing node in the neural network system performs one computation. A person skilled in the art may know that the convolution kernel may be represented by using a real number matrix. For example, FIG. 8(a) shows a convolution kernel with three rows and three columns, and each element in the convolution kernel represents a weight value. In actual application, one neural network layer may include a plurality of convolution kernels. In the neural network computing process, multiply-add computing may be performed on the input data and the convolution kernel.

Input data of a plurality of memristor arrays (for example, the second memristor array, the third memristor array, and the fourth memristor array) for parallel computing may include output data of another memristor array or external input data, and output data of the plurality of memristor arrays (for example, the second memristor array, the third memristor array, and the fourth memristor array) may be used as input data of the shared first memristor array. That is, the input data of the first memristor array may include the output data of the plurality of memristor arrays (for example, the second memristor array, the third memristor array, and the fourth memristor array).

There may be a plurality of structures of the input data and the output data of the plurality of memristor arrays for parallel computing. This is not specifically limited in this application.

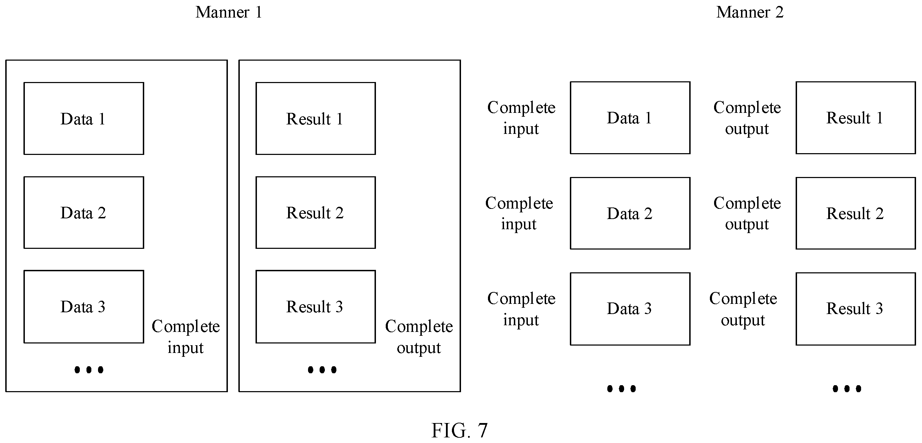

With reference to FIG. 7 to FIG. 9, the following describes in detail the structures of the input data and the output data of the plurality of memristor arrays for parallel computing.

FIG. 7 is a schematic diagram of a structure of input data and output data of a plurality of memristor arrays for parallel computing according to an embodiment of this application.

In a possible implementation, as shown in a manner 1 in FIG. 7, input data of a plurality of memristor arrays (for example, a second memristor array, a third memristor array, and a fourth memristor array) for parallel computing is combined to form one piece of complete input data, and output data of the plurality of memristor arrays for parallel computing is combined to form one piece of complete output data.

For example, input data of the second memristor array is data 1, input data of the third memristor array is data 2, and input data of the fourth memristor array is data 3. For a convolutional layer, one piece of complete input data includes a combination of the data 1, the data 2, and the data 3. Similarly, output data of the second memristor array is a result 1, output data of the third memristor array is a result 2, and output data of the fourth memristor array is a result 3. For the convolutional layer, one piece of complete output data includes a combination of the result 1, the result 2, and the result 3.

Specifically, referring to FIG. 8(a), one input picture may be split into different parts, which are respectively input into a plurality of memristor arrays (for example, the second memristor array, the third memristor array, and the fourth memristor array) for parallel computing. A combination of output results of the plurality of memristor arrays (for example, the second memristor array, the third memristor array, and the fourth memristor array) may be used as complete output data corresponding to the input picture.

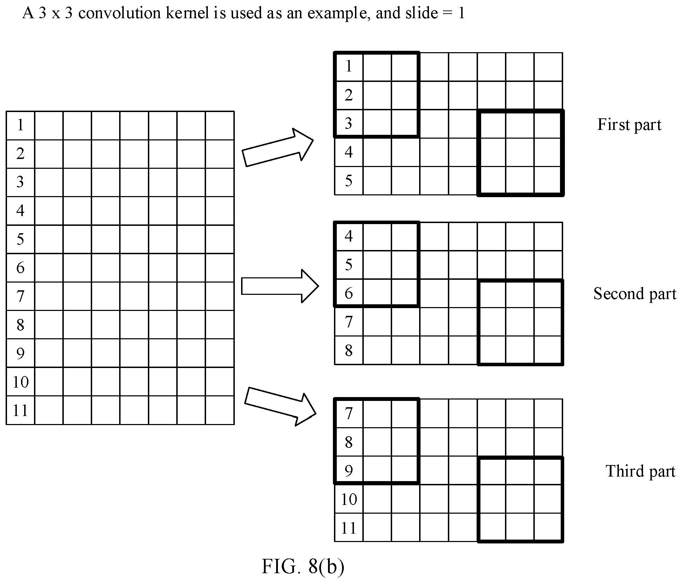

FIG. 8(b) is a schematic diagram of possible picture splitting. As shown in FIG. 8(b), one image is split into three parts, which are respectively sent to three parallel acceleration arrays for computing. A first part is sent to the second memristor array shown in FIG. 8(a), to obtain the "result 1" corresponding to the manner 1 in FIG. 7, which corresponds to an output result of the second memristor array in complete output. Similar processing may be performed on a second part and a third part. An overlapping part between the parts is determined based on a size of a convolution kernel and a sliding window stride (for example, in this instance, there are two overlapping rows between the parts), so that output results of the three arrays can form complete output. In a training process, when a complete residual of the layer is obtained, the second memristor array is used to calculate a residual value of a corresponding neuron and input of the first part based on a correspondence of a forward computing process, and in-situ updating is performed on the second memristor array. Updating of a second array and a third array is similar. For a specific updating process, refer to the following description. Details are not described herein.

In another possible implementation, as shown in a manner 2 in FIG. 7, input data of each of a plurality of memristor arrays (for example, a second memristor array, a third memristor array, and a fourth memristor array) for parallel computing is one piece of complete input data, and output data of each of the plurality of memristor arrays for parallel computing is one piece of complete output data.

For example, input data of the second memristor array is data 1. For a convolutional layer, the data 1 is one piece of complete input data, output data of the data 1 is a result 1, and the result 1 is one piece of complete output data. Similarly, input data of the third memristor array is data 2. For the convolutional layer, the data 2 is one piece of complete input data, output data of the data 2 is a result 2, and the result 2 is one piece of complete output data. Input data of the fourth memristor array is data 3. For the convolutional layer, the data 3 is one piece of complete input data, output data of the data 3 is a result 3, and the result 3 is one piece of complete output data.

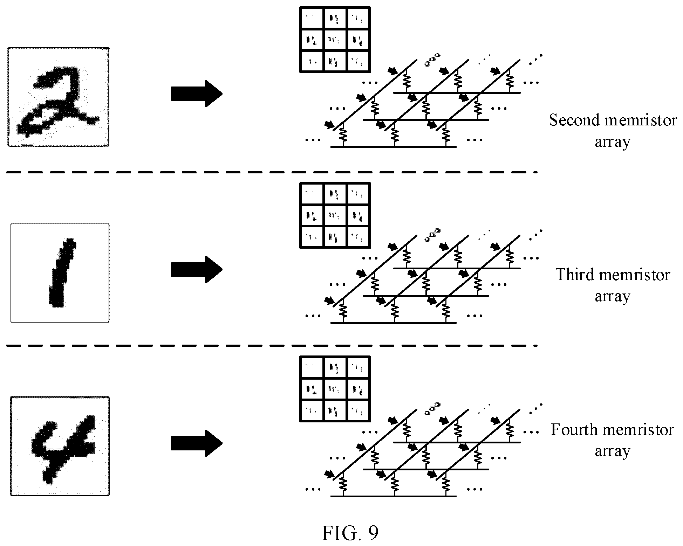

Specifically, referring to FIG. 9, a plurality of different pieces of complete input data may be respectively input into a plurality of memristor arrays (for example, the second memristor array, the third memristor array, and the fourth memristor array) for parallel computing. Each of output results of the plurality of memristor arrays (for example, the second memristor array, the third memristor array, and the fourth memristor array) corresponds to one piece of complete output data.

If an in-memory computing unit in a neural network array is affected by some non-ideal characteristics such as component fluctuation, conductance drift, and an array yield rate, the in-memory computing unit cannot achieve a lossless weight. As a result, overall performance of a neural network system is degraded, and a recognition rate of the neural network system is reduced.

The technical solutions provided in embodiments of this application may improve performance and recognition accuracy of the neural network system.

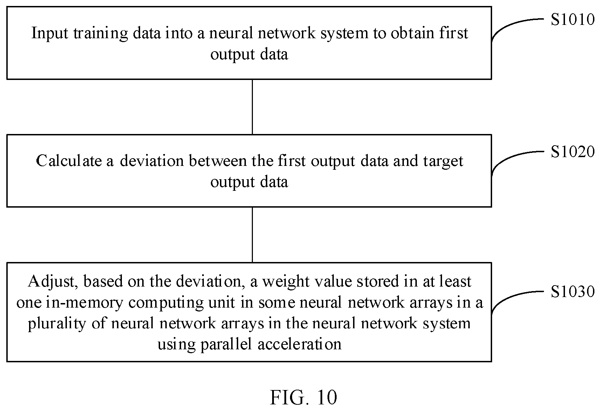

With reference to FIG. 10 to FIG. 22, the following describes in detail a method embodiment provided in embodiments of this application.

It should be noted that the technical solutions in embodiments of this application may be applied to various neural networks, for example, a convolutional neural network (convolutional neural network, CNN), a recurrent neural network widely used in natural language and speech processing, and a deep neural network combining the convolutional neural network and the recurrent neural network. A processing process of the convolutional neural network is similar to a processing process of an animal visual system, so that the convolutional neural network is very suitable for the field of image recognition. The convolutional neural network is applicable to a wide range of image recognition fields such as security protection, computer vision, and safe city, as well as speech recognition, search engine, machine translation, and other fields. In actual application, a large quantity of parameters and a large computation amount bring great challenges to application of a neural network in a scenario with high real-time performance and low power consumption.

FIG. 10 is a schematic flowchart of a method for data processing in a neural network system according to an embodiment of this application. As shown in FIG. 10, the method may include steps 1010 to 1030. The following separately describes steps 1010 to 1030 in detail.

Step 1010: Input training data into a neural network system to obtain first output data.

In this embodiment of this application, the neural network system using parallel acceleration may include a plurality of neural network arrays, each of the plurality of neural network arrays may include a plurality of in-memory computing units, and each in-memory computing unit is configured to store a weight value of a neuron in a corresponding neural network.

Step 1020: Calculate a deviation between the first output data and target output data.

The target output data may be an ideal value of the first output data that is actually output.

The deviation in this embodiment of this application may be a calculated difference between the first output data and the target output data, or may be a calculated residual between the first output data and the target output data, or may be a calculated loss function in another form between the first output data and the target output data.

Step 1030: Adjust, based on the deviation, a weight value stored in at least one in-memory computing unit in some neural network arrays in the plurality of neural network arrays in the neural network system using parallel acceleration.

In this embodiment of this application, the some neural network arrays may be configured to implement computing of some neural network layers in the neural network system. That is, a correspondence between the neural network array and the neural network layer may be a one-to-one relationship, a one-to-many relationship, or a many-to-one relationship.

For example, a first memristor array shown in FIG. 6 corresponds to a fully-connected layer in a neural network, and is configured to implement computing of the fully-connected layer. For another example, a plurality of memristor arrays (for example, a second memristor array, a third memristor array, and a fourth memristor array) shown in FIG. 6 correspond to a convolutional layer in the neural network, and are configured to implement computing of the convolutional layer.

It should be understood that the neural network layer is a logical layer concept, and one neural network layer means that one neural network operation needs to be performed. For details, refer to the description in FIG. 5. Details are not described herein.

A resistance value or a conductance value in an in-memory computing unit may be used to indicate a weight value in a neural network layer. In this embodiment of this application, a resistance value or a conductance value in the at least one in-memory computing unit in the some neural network arrays in the plurality of neural network arrays may be adjusted or rewritten based on the calculated deviation.

There are a plurality of implementations for adjusting or rewriting the resistance value or the conductance value in the in-memory computing unit. In a possible implementation, an update value of the resistance value or the conductance value in the in-memory computing unit may be determined based on the deviation, and a fixed quantity of programming pulses may be applied to the in-memory computing unit based on the update value. In another possible implementation, an update value of the resistance value or the conductance value in the in-memory computing unit is determined based on the deviation, and a programming pulse is applied to the in-memory computing unit in a read-while-write manner. In another possible implementation, different quantities of programming pulses may alternatively be applied based on characteristics of different in-memory computing units, to adjust or rewrite resistance values or conductance values in the in-memory computing units. The following provides description with reference to specific embodiments, and details are not described herein.

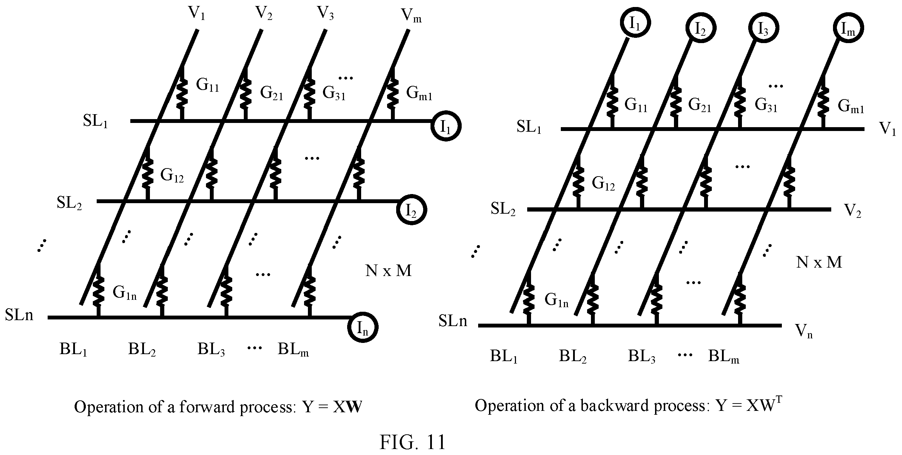

It should be noted that, in this embodiment of this application, a resistance value or a conductance value of a neural network array that is in the plurality of neural network arrays and that is configured to implement a fully-connected layer may be adjusted by using the deviation, or a resistance value or a conductance value of a neural network array that is in the plurality of neural network arrays and that is configured to implement a convolutional layer may be adjusted by using the deviation, or resistance values or conductance values of a neural network array configured to implement a fully-connected layer and a neural network array configured to implement a convolutional layer may be simultaneously adjusted by using the deviation. The following provides a detailed description with reference to FIG. 11 to FIG. 17, and details are not described herein.

For ease of description, the following first describes a computing process of a residual in detail by using a computation of a residual between an actual output value and a target output value as an example.

In a forward propagation (forward propagation, FP) computing process, a training data set such as pixel information of an input image is obtained, and data of the training data set is input into a neural network. After transmission from a first layer of neural network to a last layer of neural network, an actual output value is obtained from output of the last layer of neural network.

In a back propagation (back propagation, BP) computing process, it is expected that an actual output value of a neural network is as close as possible to prior knowledge (prior knowledge) of training data. The prior knowledge is also referred to as a ground truth (ground truth) or an ideal output value, and generally includes a true result corresponding to the training data provided by a person. Therefore, a current actual output value may be compared with the ideal output value, and then a residual value may be calculated based on a deviation between the current actual output value and the ideal output value. Specifically, a partial derivative of a target loss function may be calculated. A required update weight value is calculated based on the residual value, so that a weight value stored in at least one in-memory computing unit in a neural network array may be updated based on the required update weight value.

In an example, a square of a difference between the actual output value of the neural network and the ideal output value may be calculated, and the square is used to calculate a derivative of a weight in a weight matrix, to obtain a residual value.

Based on the determined residual value and input data corresponding to a weight value, a required update weight value is determined by using a formula (1).

$$\Delta W = \eta \sum_{i}^{N} V_i \delta_i \qquad (1)$$

$\Delta W$ represents the required update weight value, $\eta$ represents a learning rate, N indicates that there are N groups of input data, $V$ represents an input data value of a current layer, and $\delta$ represents a residual value of the current layer.

Specifically, referring to FIG. 11, in an N x M array shown in FIG. 11, an SL represents a source line (source line), and a BL represents a bit line (bit line).

In a forward operation, a voltage is input at the BL, a current is output at the SL, and a matrix-vector multiplication computation of Y = XW is completed (X corresponds to an input voltage V, and Y corresponds to an output current I). X is input computation data that may be used for forward inference.

In a backward operation, a voltage is input at the SL, a current is output at the BL, and a computation of $Y = XW^T$ is performed (X corresponds to an input voltage V, and Y corresponds to an output current I). X is a residual value, that is, a back propagation computation of the residual value is completed. A memristor array update operation (also referred to as in-situ updating) may complete a process of changing a weight in a gradient direction.

Optionally, in some embodiments, for a cumulative update weight obtained in a row m and a column n of the layer, whether to update a weight value of the row m and the column n of the layer may be further determined based on the following formula (2).

$$\Delta W_{m,n} = \begin{cases} \Delta W_{m,n} & \left| \Delta W_{m,n} \right| \geq Threshold \\ 0 & \left| \Delta W_{m,n} \right| < Threshold \end{cases} \qquad (2)$$

Threshold (threshold) represents a preset threshold.

For the cumulative update weight $\Delta W_{m,n}$ obtained in the row m and the column n of the layer, a threshold updating rule shown in the formula (2) is used. That is, for a weight that does not meet a threshold (threshold) requirement, no updating is performed. Specifically, if $\Delta W_{m,n}$ is greater than or equal to the preset threshold, the weight value of the row m and the column n of the layer may be updated. If $\Delta W_{m,n}$ is less than the preset threshold, the weight value of the row m and the column n of the layer is not updated.

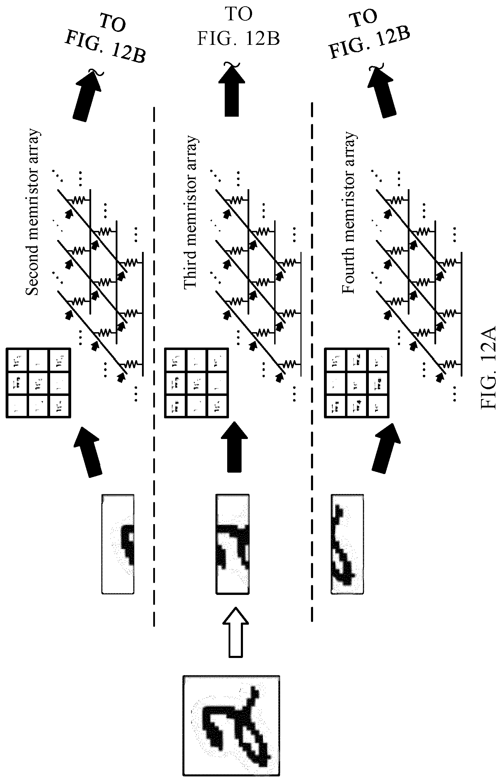

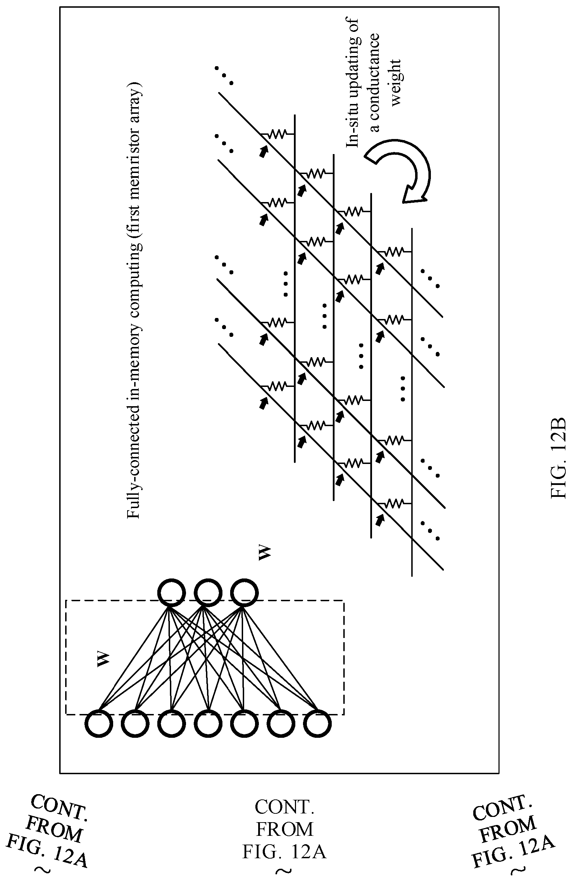

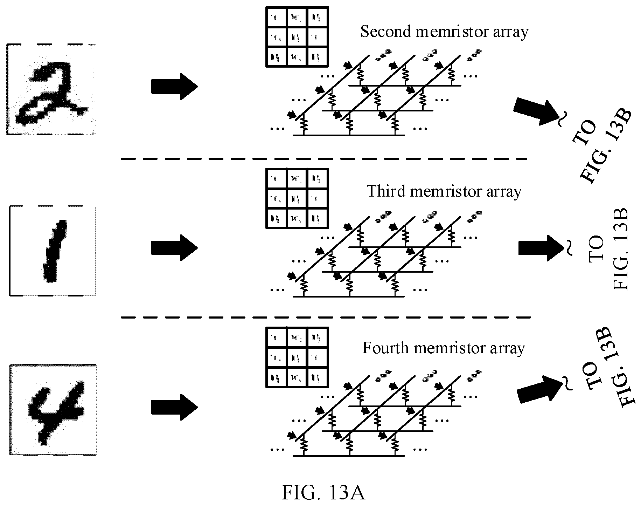

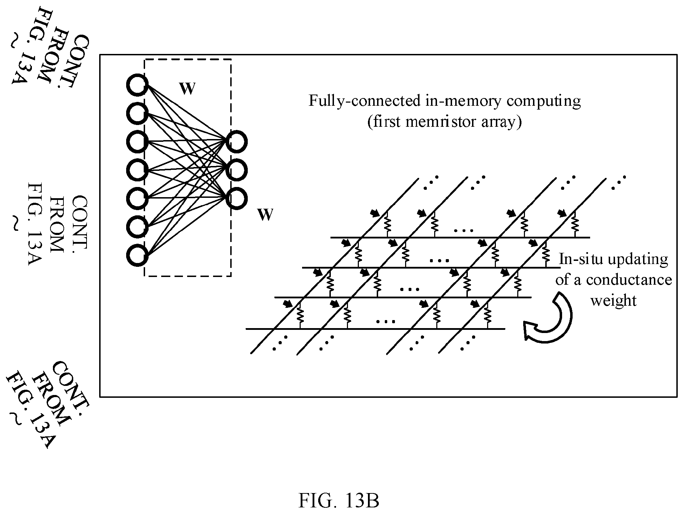

With reference to FIG. 12A and FIG. 12B and FIG. 13A and FIG. 13B, the following uses different data organizational structures as examples to describe in detail a specific implementation process of updating a weight value stored in a first memristor array for implementing computing of a fully-connected layer.

FIG. 12A and FIG. 12B are a schematic diagram of updating a weight value stored in a first memristor array for implementing computing of a fully-connected layer in a plurality of memristor arrays.

As shown in FIG. 12A and FIG. 12B, a weight of a neural network layer trained in advance may be written into a plurality of memristor arrays. That is, a weight of a corresponding neural network layer is stored in the plurality of memristor arrays. For example, a first memristor array may implement computing of a fully-connected layer in a neural network. A weight of the fully-connected layer in the neural network may be stored in the first memristor array, and a conductance value of each memristor cell in the memristor array may be used to indicate the weight of the fully-connected layer and implement a multiply-accumulate computing process of the fully-connected layer in the neural network. For another example, a plurality of memristor arrays (for example, a second memristor array, a third memristor array, and a fourth memristor array) may implement computing of a convolutional layer in the neural network. A weight of a same position on the convolutional layer may be implemented by using a plurality of memristor arrays, thereby implementing parallel acceleration for different input.

As shown in FIG. 8(a), one input picture is split into different parts, which are respectively input into a plurality of memristor arrays (for example, the second memristor array, the third memristor array, and the fourth memristor array) for parallel computing. Output results of the plurality of memristor arrays (for example, the second memristor array, the third memristor array, and the fourth memristor array) may be used as input data to be input into the first memristor array, and first output data is obtained by using the first memristor array.

In this embodiment of this application, a residual value may be calculated based on the first output data and ideal output data by using the foregoing method for calculating a residual value. In addition, based on the formula (1), in-situ updating is performed on a weight value stored in each memristor in the first memristor array for implementing computing of the fully-connected layer.

FIG. 13A and FIG. 13B are another schematic diagram of updating a weight value stored in a first memristor array for implementing computing of a fully-connected layer in a plurality of memristor arrays.

As shown in FIG. 9, a plurality of different pieces of input data are respectively input into a plurality of memristor arrays (for example, a second memristor array, a third memristor array, and a fourth memristor array) for parallel computing. Output results of the plurality of memristor arrays (for example, the second memristor array, the third memristor array, and the fourth memristor array) may be used as input data to be input into the first memristor array, and first output data is obtained by using the first memristor array.

In this embodiment of this application, a residual value may be calculated based on the first output data and ideal output data by using the foregoing method for calculating a residual value. In addition, based on the formula (1), in-situ updating is performed on a weight value stored in each memristor in the first memristor array for implementing computing of the fully-connected layer.

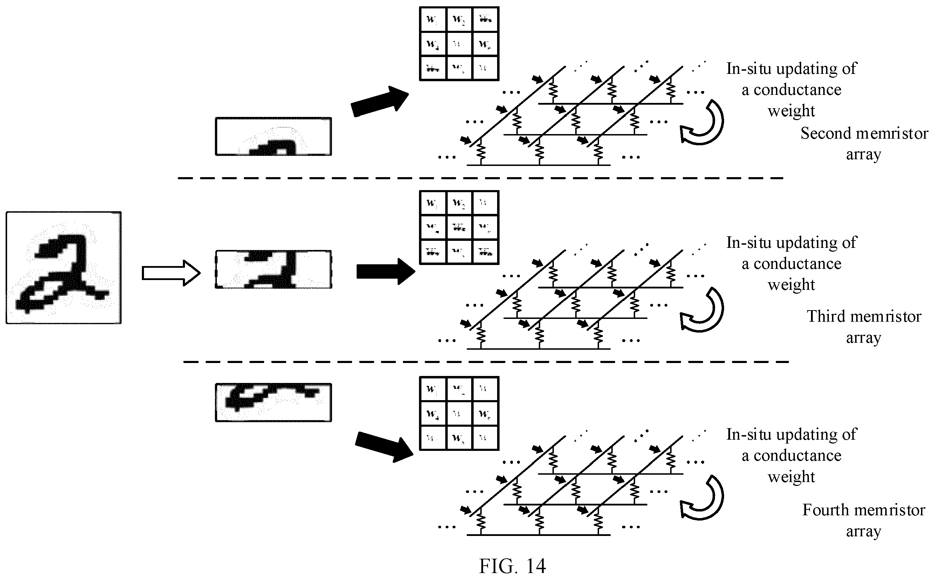

With reference to FIG. 14 to FIG. 17, the following uses different data organizational structures as examples to describe in detail a specific implementation process of updating weight values stored in a plurality of memristor arrays for implementing computing of a convolutional layer in parallel.

FIG. 14 is a schematic diagram of updating weight values stored in a plurality of memristor arrays for implementing computing of a convolutional layer.

As shown in FIG. 8(a), one input picture is split into different parts, which are respectively input into a plurality of memristor arrays (for example, a second memristor array, a third memristor array, and a fourth memristor array) for parallel computing. A combination of output results of the plurality of memristor arrays (for example, the second memristor array, the third memristor array, and the fourth memristor array) may be used as complete output data corresponding to the input picture.

In this embodiment of this application, a residual value may be calculated based on the output data and ideal output data by using the foregoing method for calculating a residual value. In addition, based on the formula (1), in-situ updating is performed on a weight value stored in each memristor in a plurality of memristor arrays (for example, the second memristor array, the third memristor array, and the fourth memristor array) for implementing computing of a convolutional layer in parallel. There are a plurality of specific implementations.

In a possible implementation, a residual value may be calculated based on output values of the plurality of memristor arrays (for example, the second memristor array, the third memristor array, and the fourth memristor array) and a corresponding ideal output value, and based on the residual value, in-situ updating may be performed on the weight value stored in each memristor in the plurality of memristor arrays for implementing computing of the convolutional layer in parallel.

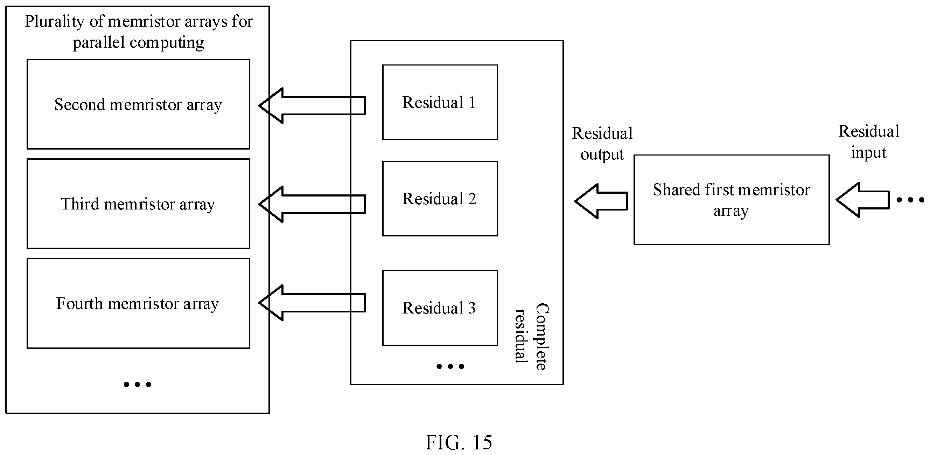

In another possible implementation, a residual value may alternatively be calculated based on a first output value of a first memristor array and a corresponding ideal output value, and based on the residual value, in-situ updating may be performed on the weight value stored in each memristor in the plurality of memristor arrays (for example, the second memristor array, the third memristor array, and the fourth memristor array) for implementing computing of the convolutional layer in parallel. The following provides a detailed description with reference to FIG. 15.

FIG. 15 is a schematic diagram of updating, based on a residual value, weight values stored in a plurality of memristor arrays for implementing computing of a convolutional layer.

As shown in FIG. 15, a complete residual may be a residual value of a shared first memristor array, and the residual value is determined based on an output value of the first memristor array and a corresponding ideal output value. In this embodiment of this application, the complete residual may be divided into a plurality of sub-residuals, for example, a residual 1, a residual 2, and a residual 3.

Each sub-residual corresponds to output data of each of a plurality of memristor arrays for parallel computing. For example, the residual 1 corresponds to output data of a second memristor array, the residual 2 corresponds to output data of a third memristor array, and the residual 3 corresponds to output data of a fourth memristor array.

In this embodiment of this application, based on input data of each of the plurality of memristor arrays and the sub-residual in combination with the formula (2), in-situ updating is performed on a weight value stored in each memristor in the memristor array.

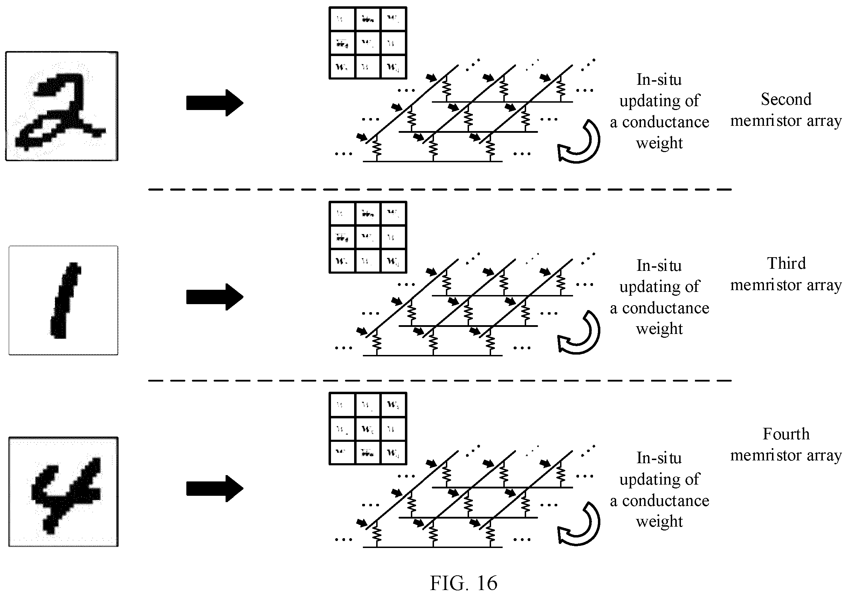

FIG. 16 is another schematic diagram of updating weight values stored in a plurality of memristor arrays for implementing computing of a convolutional layer.

According to a structure of input data shown in FIG. 9, a plurality of different pieces of input data are respectively input into a plurality of memristor arrays (for example, a second memristor array, a third memristor array, and a fourth memristor array) for parallel computing. Each of output results of the plurality of memristor arrays (for example, the second memristor array, the third memristor array, and the fourth memristor array) corresponds to one piece of complete output data.

In this embodiment of this application, a residual value may be calculated based on the output data and ideal output data by using the foregoing method for calculating a residual value. In addition, based on the formula (1), rewriting is performed on a weight value stored in each memristor in a plurality of memristor arrays (for example, the second memristor array, the third memristor array, and the fourth memristor array) for implementing computing of a convolutional layer in parallel. There are a plurality of specific implementations.

In a possible implementation, a residual value may be calculated based on output values of the plurality of memristor arrays (for example, the second memristor array, the third memristor array, and the fourth memristor array) and a corresponding ideal output value, and based on the residual value, in-situ updating may be performed on the weight value stored in each memristor in the plurality of memristor arrays for implementing computing of the convolutional layer in parallel.

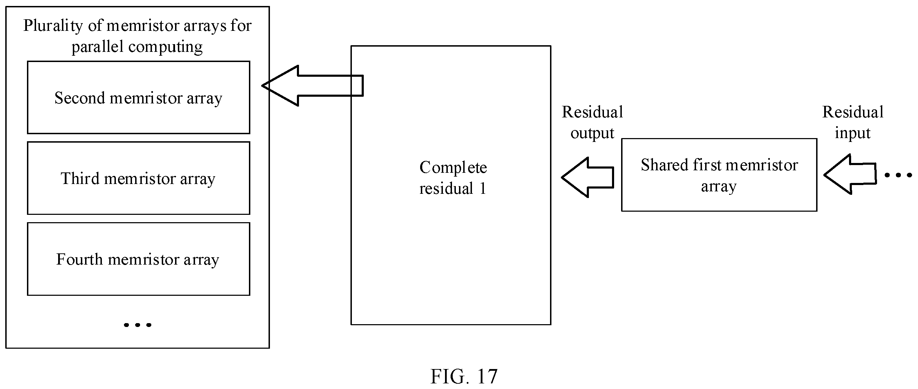

In another possible implementation, a residual value may alternatively be calculated based on a first output value of a first memristor array and a corresponding ideal output value, and based on the residual value, in-situ updating may be performed on the weight value stored in each memristor in the plurality of memristor arrays (for example, the second memristor array, the third memristor array, and the fourth memristor array) for implementing computing of the convolutional layer in parallel. The following provides a detailed description with reference to FIG. 17.

FIG. 17 is another schematic diagram of updating, based on a residual value, weight values stored in a plurality of memristor arrays for implementing computing of a convolutional layer.

As shown in FIG. 17, a complete residual may be a residual value of a shared first memristor array, and the residual value is determined based on an output value of the first memristor array and a corresponding ideal output value. Because each memristor array participating in parallel acceleration processes an obtained complete output result, each memristor array may be updated based on related complete residual data. It is assumed that the complete residual is obtained based on an output result 1 of a second memristor array. Therefore, based on the complete residual and input data 1 of the second memristor array and by using the formula (1), in-situ updating may be performed on a weight value stored in each memristor in the second memristor array.

Optionally, in this embodiment of this application, weight values stored in upstream arrays of a plurality of memristor arrays for implementing computing of a convolutional layer in parallel may be further adjusted, and a residual value of each layer of neurons may be calculated in a back propagation manner. For details, refer to the method described above. Details are not described herein. It should be understood that, for upstream neural network arrays of the plurality of memristor arrays for implementing computing of the convolutional layer in parallel, input data of these arrays may be output data of further upstream memristor arrays, or may be raw data input from the outside, such as an image, a text, or a speech. Output data of these arrays is used as input data of the plurality of memristor arrays for implementing computing of the convolutional layer in parallel.

With reference to FIG. 11 to FIG. 17, the foregoing describes adjustment of a weight value stored in a neural network matrix for implementing computing of a fully-connected layer, and adjustment of weight values stored in a plurality of neural network matrices for implementing computing of a convolutional layer in parallel. It should be understood that, in this embodiment of this application, the weight value stored in the neural network matrix for implementing computing of the fully-connected layer and the weight values stored in the plurality of neural network matrices for implementing computing of the convolutional layer in parallel may alternatively be simultaneously adjusted. A method is similar, and details are not described herein.

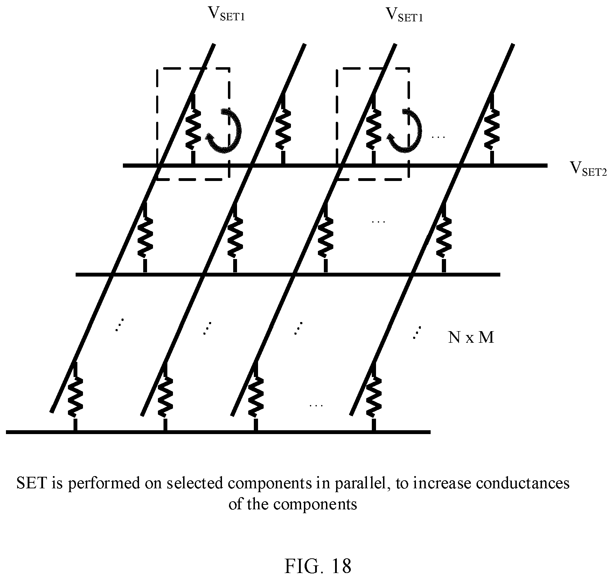

With reference to FIG. 18 to FIG. 21, the following describes a set (set) operation and a reset (reset) operation by using an example in which target data is written into a target memristor cell located at an intersection of a BL and an SL.

The set operation is used to adjust a conductance of the memristor cell from a low conductance to a high conductance, and the reset operation is used to adjust the conductance of the memristor cell from the high conductance to the low conductance.

As shown in FIG. 18, it is assumed that a target conductance range of the target memristor cell may represent a target weight $W_{11}$. In a process of writing $W_{11}$ to the target memristor cell, if a current conductance of the target memristor cell is lower than a lower limit of the target conductance range, the set operation may be performed to increase the conductance of the target memristor cell. In this case, a voltage may be loaded to a gate of a transistor in the target memristor cell that needs to be adjusted through the $SL_{11}$ to turn on the transistor, so that the target memristor cell is in a selection state. In addition, an SL connected to the target memristor cell and other BLs in a cross array are also grounded, and then a set pulse is applied to the BL in which the target memristor cell is located, to adjust the conductance of the target memristor cell.

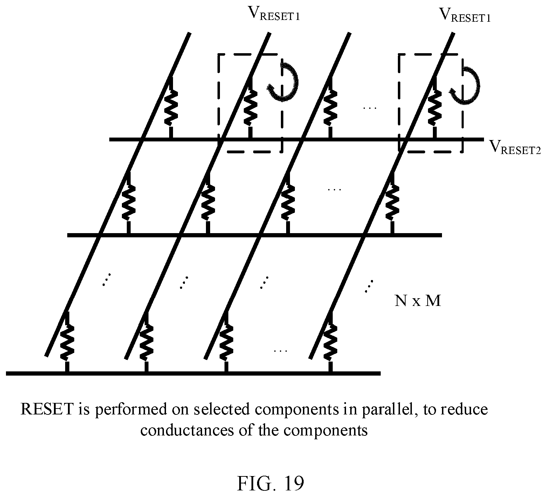

As shown in FIG. 19, if the current conductance of the target memristor cell is higher than an upper limit of the target conductance range, the conductance of the target memristor cell may be reduced by performing a reset operation. In this case, a voltage may be loaded to a gate of a transistor in the target memristor cell that needs to be adjusted through the SL, so that the target memristor cell is in a selection state. In addition, a BL connected to the target memristor cell and other SLs in the cross array are grounded. Then, a reset pulse is applied to the SL in which the target memristor cell is located, to adjust the conductance of the target memristor cell.

There are a plurality of specific implementations for adjusting the conductance of the target memristor cell. For example, a fixed quantity of programming pulses may be applied to the target memristor cell. For another example, a programming pulse may alternatively be applied to the target memristor cell in a read-while-write manner. For another example, different quantities of programming pulses may alternatively be applied to different memristor cells, to adjust conductance values of the memristor cells.

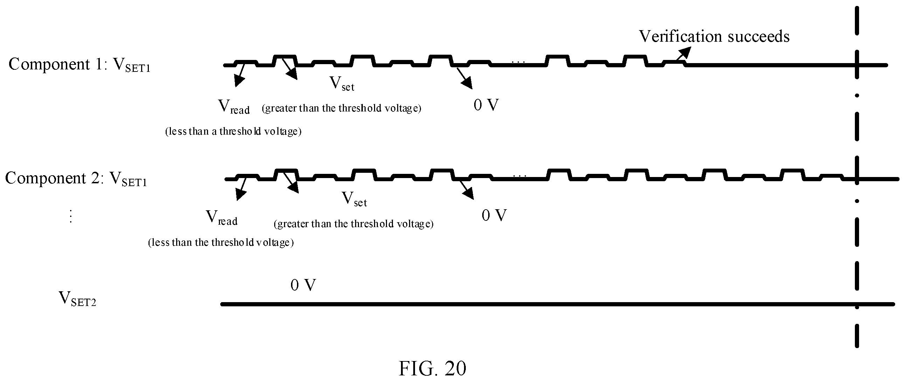

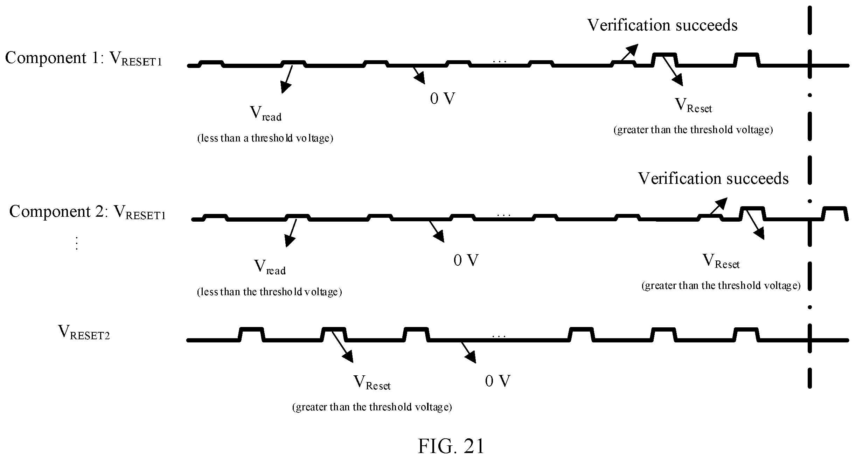

Based on the set operation and the reset operation, and with reference to FIG. 20 and FIG. 21, the following describes in detail a specific implementation in which a programming pulse is applied to the target memristor cell in the read-while-write manner.

In this embodiment of this application, the target data may be written into the target memristor cell based on an incremental step pulse programming (incremental step pulse programming, ISPP) policy. Specifically, according to the ISPP policy, the conductance of the target memristor cell is generally adjusted in a "read verification-correction" manner, so that the conductance of the target memristor cell is finally adjusted to a target conductance corresponding to the target data.

Referring to FIG. 20, a component 1, a component 2, and the like are target memristor cells in a selected memristor array. First, a read pulse ($V_{read}$) may be applied to a target memristor cell, to read a current conductance of the target memristor cell. The current conductance is compared with the target conductance. If the current conductance is less than the target conductance, a set pulse ($V_{set}$) may be loaded to the target memristor cell, to increase the conductance of the target memristor cell. Then, an adjusted conductance is read by using a read pulse ($V_{read}$). If the current conductance is still less than the target conductance, a set pulse ($V_{set}$) is further loaded to the target memristor cell, so that the conductance of the target memristor cell is adjusted to the target conductance.

Referring to FIG. 21, a component 1, a component 2, and the like are target memristor cells in a selected memristor array. First, a read pulse ($V_{read}$) may be applied to a target memristor cell, to read a current conductance of the target memristor cell. The current conductance is compared with the target conductance. If the current conductance is greater than the target conductance, a reset pulse ($V_{reset}$) may be loaded to the target memristor cell, to reduce the conductance of the target memristor cell. Then, an adjusted conductance is read by using a read pulse ($V_{read}$). If the current conductance is still greater than the target conductance, a reset pulse ($V_{reset}$) is further loaded to the target memristor cell, so that the conductance of the target memristor cell is adjusted to the target conductance.

It should be understood that $V_{read}$ may be a read voltage pulse less than a threshold voltage, and $V_{set}$ or $V_{reset}$ may be a read voltage pulse greater than the threshold voltage.

In this embodiment of this application, the conductance of the target memristor cell may be finally adjusted in the read-while-write manner to the target conductance corresponding to the target data. Optionally, a terminating condition may be that conductance increase amounts of all selected components in the row meet a requirement.

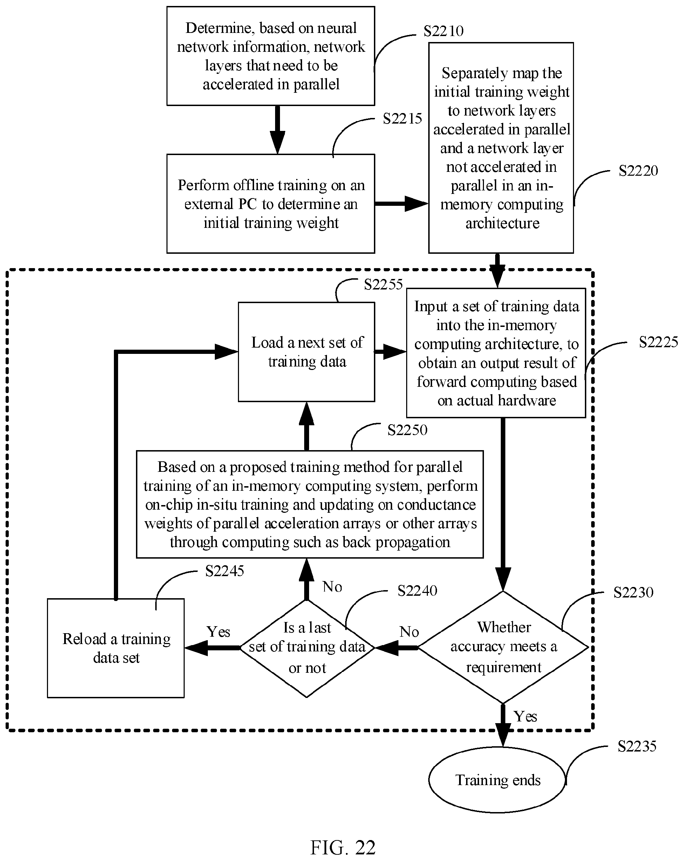

FIG. 22 is a schematic flowchart of a training process of a neural network according to an embodiment of this application. As shown in FIG. 22, the method may include steps 2210 to 2255. The following separately describes steps 2210 to 2255 in detail.

Step 2210: Determine, based on neural network information, a network layer that needs to be accelerated.

In this embodiment of this application, the network layer that needs to be accelerated may be determined based on one or more of the following: a quantity of layers of the neural network, parameter information, a size of a training data set, and the like.

Step 2215: Perform offline training on an external personal computer (personal computer, PC) to determine an initial training weight.

A weight parameter on a neuron of the neural network may be trained on the external PC by performing steps such as forward computing and backward computing, to determine the initial training weight.

Step 2220: Separately map the initial training weight to a neural network array that implements parallel acceleration of network layer computing and a neural network array that implements non-parallel acceleration of network layer computing in an in-memory computing architecture.

In this embodiment of this application, the initial training weight may be separately mapped to at least one in-memory computing unit in a plurality of neural network arrays in the in-memory computing architecture based on the method shown in FIG. 3, so that a matrix multiply-add operation of input data and a configured weight may be implemented by using the neural network arrays.

The plurality of neural network arrays may include the neural network array that implements non-parallel acceleration of network layer computing and the neural network array that implements parallel acceleration of network layer computing.

Step 2225: Input a set of training data into the plurality of neural network arrays in the in-memory computing architecture, to obtain an output result of forward computing based on actual hardware of the in-memory computing architecture.

Step 2230: Determine whether accuracy of a neural network system meets a requirement or whether a preset quantity of training times is reached.

If the accuracy of the neural network system meets the requirement or the preset quantity of training times is reached, step 2235 may be performed.

If the accuracy of the neural network system does not meet the requirement or the preset quantity of training times is not reached, step 2240 may be performed.

Step 2235: Training ends.

Step 2240: Determine whether the training data is a last set of training data.

If the training data is the last set of training data, step 2245 and step 2255 may be performed.

If the training data is not the last set of training data, step 2250 and step 2255 may be performed.

Step 2245: Reload training data.

Step 2250: Based on a proposed training method for parallel training of an in-memory computing system, perform on-chip in-situ training and updating on conductance weights of parallel acceleration arrays or other arrays through computing such as back propagation.

For a specific updating method, refer to the foregoing description. Details are not described herein.

Step 2255: Load a next set of training data.

After the next set of training data is loaded, the operation in step 2225 continues to be performed. That is, the loaded training data is input into the plurality of neural network arrays in the in-memory computing architecture, to obtain an output result of forward computing based on the actual hardware of the in-memory computing architecture.

It should be understood that sequence numbers of the foregoing processes do not mean execution sequences in embodiments of this application. The execution sequences of the processes should be determined based on functions and internal logic of the processes, and should not be construed as any limitation to the implementation processes of embodiments of this application.

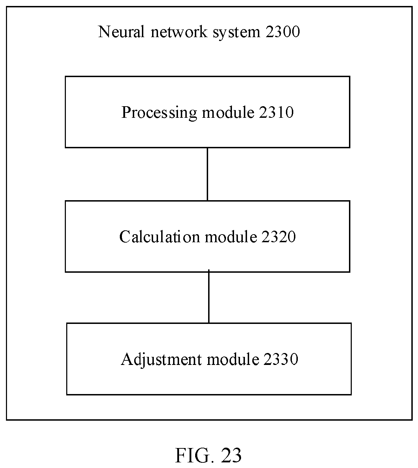

With reference to FIG. 1 to FIG. 22, the foregoing describes in detail the method for data processing in a neural network system provided in embodiments of this application. The following describes in detail an apparatus embodiment of this application with reference to FIG. 23. It should be understood that, description of the method embodiments corresponds to description of the apparatus embodiments. Therefore, for a part not described in detail, refer to the foregoing method embodiments.

It should be noted that implementation of the solutions of this application is considered in the apparatus embodiments from a perspective of a product and a device. Some content of the apparatus embodiments of this application and some content of the foregoing described method embodiments of this application are corresponding to or complementary to each other. The content is universal in terms of implementation of the solutions and support for a scope of the claims.

The following describes an apparatus embodiment of this application with reference to FIG. 23.

FIG. 23 is a schematic diagram of a structure of a neural network system 2300 according to an embodiment of this application. It should be understood that the neural network system 2300 shown in FIG. 23 is merely an example, and the apparatus in this embodiment of this application may further include another module or unit. It should be understood that the neural network system 2300 can perform various steps in the methods of FIG. 10 to FIG. 22, and to avoid repetition, details are not described herein.

As shown in FIG. 23, the neural network system 2300 may include:

a processing module 2310, configured to input training data into the neural network system to obtain first output data, where the neural network system includes a plurality of neural network arrays, each of the plurality of neural network arrays includes a plurality of in-memory computing units, and each in-memory computing unit is configured to store a weight value of a neuron in a corresponding neural network;
a calculation module 2320, configured to calculate a deviation between the first output data and target output data; and
an adjustment module 2330, configured to adjust, based on the deviation, a weight value stored in at least one in-memory computing unit in some neural network arrays in the plurality of neural network arrays, where the some neural network arrays are configured to implement computing of some neural network layers in the neural network system.

Optionally, in a possible implementation, the plurality of neural network arrays include a first neural network array and a second neural network array, and input data of the first neural network array includes output data of the second neural network array.

In another possible implementation, the first neural network array includes a neural network array configured to implement computing of a fully-connected layer in the neural network.

Optionally, in another possible implementation, the adjustment module 2330 is specifically configured to:
adjust, based on input data of the first neural network array and the deviation, a weight value stored in at least one in-memory computing unit in the first neural network array.

Optionally, in another possible implementation, the plurality of neural network arrays further include a third neural network array, and the third neural network array and the second neural network array are configured to implement computing of a convolutional layer in the neural network in parallel.

Optionally, in another possible implementation,
the adjustment module 2330 is specifically configured to:

adjust, based on input data of the second neural network array and the deviation, a weight value stored in at least one in-memory computing unit in the second neural network array; and
adjust, based on input data of the third neural network array and the deviation, a weight value stored in at least one in-memory computing unit in the third neural network array.

In another possible implementation,
the adjustment module 2330 is specifically configured to:

divide the deviation into at least two sub-deviations, where a first sub-deviation in the at least two sub-deviations corresponds to the output data of the second neural network array, and a second sub-deviation in the at least two sub-deviations corresponds to output data of the third neural network array;
adjust, based on the first sub-deviation and input data of the second neural network array, a weight value stored in at least one in-memory computing unit in the second neural network array; and
adjust, based on the second sub-deviation and input data of the third neural network array, a weight value stored in at least one in-memory computing unit in the third neural network array.

Optionally, in another possible implementation, the adjustment module 2330 is specifically configured to determine a quantity of pulses based on an updated weight value in the in-memory computing unit, and rewrite, based on the quantity of pulses, the weight value stored in the at least one in-memory computing unit in the neural network array.

It should be understood that the neural network system 2300 herein is embodied in a form of a functional module. The term "module" herein may be implemented in a form of software and/or hardware. This is not specifically limited. For example, the "module" may be a software program, a hardware circuit, or a combination thereof that implements the foregoing functions. When any one of the foregoing modules is implemented by using software, the software exists in a form of computer program instructions, and is stored in a memory. A processor may be configured to execute the program instructions to implement the foregoing method procedures. The processor may include but is not limited to at least one of the following computing devices that run various types of software: a central processing unit (central processing unit, CPU), a microprocessor, a digital signal processor (digital signal processing, DSP), a microcontroller unit (microcontroller unit, MCU), an artificial intelligence processor, and the like. Each computing device may include one or more cores configured to perform an operation or processing by executing software instructions. The processor may be an independent semiconductor chip, or may be integrated with another circuit to constitute a semiconductor chip. For example, the processor may constitute a system on chip (system on chip, SoC) with another circuit (for example, an encoding/decoding circuit, a hardware acceleration circuit, or various bus and interface circuits). Alternatively, the processor may be integrated into an application-specific integrated circuit (application-specific integrated circuit, ASIC) as a built-in processor of the ASIC, and the ASIC integrated with the processor may be independently packaged or may be packaged with another circuit. The processor includes a core configured to perform an operation or processing by executing software instructions, and may further include a necessary hardware accelerator, for example, a field programmable gate array (field programmable gate array, FPGA), a programmable logic device (programmable logic device, PLD), or a logic circuit that implements a special-purpose logic operation.

When the foregoing modules are implemented by using the hardware circuit, the hardware circuit may be implemented by a general-purpose central processing unit (central processing unit, CPU), a microcontroller unit (microcontroller unit, MCU), a (micro processing unit, MPU), a digital signal processor (digital signal processing, DSP), and a system on chip (system on chip, SoC), or certainly may be implemented by an application-specific integrated circuit (application-specific integrated circuit, ASIC) or a programmable logic device (programmable logic device, PLD). The PLD may be a complex programmable logic device (complex programmable logic device, CPLD), a field programmable gate array (field programmable gate array, FPGA), generic array logic (generic array logic, GAL), or any combination thereof. The PLD may run necessary software or does not depend on software to execute the foregoing method.

All or some of the foregoing embodiments may be implemented by software, hardware, firmware, or any combination thereof. When software is used to implement embodiments, all or some of the foregoing embodiments may be implemented in a form of a computer program product. The computer program product includes one or more computer instructions or computer programs. When the program instructions or the computer programs are loaded and executed on a computer, the procedure or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually represents an "or" relationship between the associated objects, or may represent an "and/or" relationship. A specific meaning depends on a context.

In this application, "at least one" refers to one or more, and "a plurality of" refers to two or more. "At least one of the following items (pieces)" or a similar expression thereof means any combination of these items, including any combination of singular items (pieces) or plural items (pieces). For example, at least one (piece) of a, b, or c may represent: a, b, c; a and b; a and c; b and c; or a, b, and c, where a, b, and c may be singular or plural.

It should be understood that sequence numbers of the foregoing processes do not mean execution sequences in embodiments of this application. The execution sequences of the processes should be determined based on functions and internal logic of the processes, and should not be construed as any limitation to the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by the hardware or the software depends on particular applications and design constraint conditions of the technical solutions. A person skilled in the art may use different methods to implement the described functions for each particular application, but it should not be considered that the implementation goes beyond the scope of this application.

It may be clearly understood by the person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

Units described as separate parts may or may not be physically separate, and parts displayed as units may or may not be physical units, may be located in one position, or may be distributed on a plurality of network units. Some or all of the units may be selected depending on actual requirements to achieve the objectives of the solutions in embodiments.

In addition, functional units in embodiments of this application may be integrated into one processing unit, or each of the units may exist alone physically, or two or more units are integrated into one unit.

When the functions are implemented in the form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium, for example, a USB flash drive, a removable hard disk, a read-only memory (read-only memory, ROM), a random access memory (random access memory, RAM), a magnetic disk, or an optical disc, that can store program code.

The foregoing description is merely a specific implementation of this application, but is not intended to limit the protection scope of this application. Therefore, the protection scope of this application shall be subject to the protection scope of the claims.

**Claims**

1. A method for data processing performed by a neural network system, the method comprising the steps of:

   • inputting (S1010) training data into a neural network system to obtain first output data, wherein the neural network system comprises a plurality of neural network arrays, each of the plurality of neural network arrays comprises a plurality of in-memory computing units, and each in-memory computing unit is configured to store a weight value of a neuron in a corresponding neural network, wherein an initial value of the weight value is determined by performing offline training, wherein the plurality of neural network arrays comprise a first neural network array, a second neural network array, and a third neural network array, wherein input data of the first neural network array comprises output data of the second neural network array, and the third neural network array and the second neural network array are configured to implement computing of a convolutional layer in the neural network in parallel;

• calculating (S1020) a deviation between the first output data and target output data; and

• adjusting (S1030), based on the deviation, a weight value stored in at least one in-memory computing unit in some neural network arrays in the plurality of neural network arrays, wherein the some neural network arrays are configured to implement computing of some neural network layers in the neural network system, wherein the adjusting, based on the deviation, the weight value stored in at least one in-memory computing unit in some neural network arrays in the plurality of neural network arrays comprises:

○ dividing the deviation into at least two sub-deviations, wherein a first sub-deviation in the at least two sub-deviations corresponds to the output data of the second neural network array, and a second sub-deviation in the at least two sub-deviations corresponds to output data of the third neural network array;
○ adjusting, based on the first sub-deviation and input data of the second neural network array, a weight value stored in at least one in-memory computing unit in the second neural network array; and
○ adjusting, based on the second sub-deviation and input data of the third neural network array, a weight value stored in at least one in-memory computing unit in the third neural network array.

2. The method according to claim 1, wherein the first neural network array comprises a neural network array configured to implement computing of a fully-connected layer in the neural network.

3. The method according to claim 2, wherein the adjusting, based on the deviation, the weight value stored in at least one in-memory computing unit in some neural network arrays in the plurality of neural network arrays comprises:

o adjusting, based on input data of the first neural network array and the deviation, a weight value stored in at least one in-memory computing unit in the first neural network array.

4. A neural network system configured to perform the method according to any of claims 1 to 3, wherein the neural network system comprises a plurality of neural network arrays, each of the plurality of neural network arrays comprises a plurality of in-memory computing units, and each in-memory computing unit is configured to store a weight value of a neuron in a corresponding neural network.

5. A computer-readable storage medium storing program code, wherein, when the program code is executed by the neural network system according to claim 4, the neural network system is caused to perform the method according to any of claims 1 to 3.

**Patentansprüche**

1. Verfahren zum Datenverarbeiten, das durch ein neuronales Netzwerksystem durchgeführt wird, wobei das Verfahren die Schritte umfasst:

• Eingeben (S1010) von Trainingsdaten in ein neuronales Netzwerksystem, um erste Ausgabedaten zu erhalten, wobei das neuronale Netzwerksystem eine Vielzahl von neuronalen Netzwerkarrays umfasst, jedes der Vielzahl von neuronalen Netzwerkarrays eine Vielzahl von speicherinternen Recheneinheiten umfasst und jede speicherinterne Recheneinheit konfiguriert ist, um einen Gewichtungswert eines Neurons in einem entsprechenden neuronalen Netzwerk zu speichern, wobei ein Anfangswert des Gewichtungswerts durch Durchführen eines Offline-Trainings bestimmt wird, wobei die Vielzahl von neuronalen Netzwerkarrays ein erstes neuronales Netzwerkarray, ein zweites neuronales Netzwerkarray und ein drittes neuronales Netzwerkarray umfasst, wobei Eingabedaten des ersten neuronalen Netzwerkarrays Ausgabedaten des zweiten neuronalen Netzwerkarrays umfassen und das dritte neuronale Netzwerkarray und das zweite neuronale Netzwerkarray konfiguriert sind, um das Berechnen einer Faltungsschicht in dem neuronalen Netzwerk parallel zu implementieren;

• Kalkulieren (S1020) einer Abweichung zwischen den ersten Ausgabedaten und den Zielausgabedaten; und

• Anpassen (S1030), basierend auf der Abweichung, eines Gewichtungswerts, der in mindestens einer speicherinternen Recheneinheit in einigen neuronalen Netzwerkarrays in der Vielzahl von neuronalen Netzwerkarrays gespeichert ist, wobei die einigen neuronalen Netzwerkarrays konfiguriert sind, um das Berechnen einiger neuronaler Netzwerkschichten in dem neuronalen Netzwerksystem zu implementieren, wobei das Anpassen, basierend auf der Abweichung, des Gewichtungswerts, der in mindestens einer speicherinternen Recheneinheit in einigen neuronalen Netzwerkarrays in der Vielzahl von neuronalen Netzwerkarrays gespeichert ist, umfasst:

◦ Aufteilen der Abweichung in mindestens zwei Unterabweichungen, wobei eine erste Unterabweichung in den mindestens zwei Unterabweichungen den Ausgabedaten des zweiten neuronalen Netzwerkarrays entspricht und eine zweite Unterabweichung in den mindestens zwei Unterabweichungen den Ausgabedaten des dritten neuronalen Netzwerkarrays entspricht;
◦ Anpassen, basierend auf der ersten Unterabweichung und den Eingabedaten des zweiten neuronalen Netzwerkarrays, eines Gewichtungswerts, der in mindestens einer speicherinternen Recheneinheit in dem zweiten neuronalen Netzwerkarray gespeichert ist; und
◦ Anpassen, basierend auf der zweiten Unterabweichung und den Eingabedaten des dritten neuronalen Netzwerkarrays, eines Gewichtungswerts, der in mindestens einer speicherinternen Recheneinheit in dem dritten neuronalen Netzwerkarray gespeichert ist.

2. Verfahren nach Anspruch 1, wobei das erste neuronale Netzwerkarray ein neuronales Netzwerkarray umfasst, das konfiguriert ist, um das Berechnen einer vollständig verbundenen Schicht in dem neuronalen Netzwerk zu implementieren.

3. Verfahren nach Anspruch 2, wobei das Anpassen, basierend auf der Abweichung, des Gewichtungswerts, der in mindestens einer speicherinternen Recheneinheit in einigen neuronalen Netzwerkarrays in der Vielzahl von neuronalen Netzwerkarrays gespeichert ist, umfasst:

◦ Anpassen, basierend auf Eingabedaten des ersten neuronalen Netzwerkarrays und der Abweichung, eines Gewichtungswerts, der in mindestens einer speicherinternen Recheneinheit in dem ersten neuronalen Netzwerkarray gespeichert ist.

4. Neuronales Netzwerksystem, das konfiguriert ist, um das Verfahren nach einem der Ansprüche 1 bis 3 durchzuführen, wobei das neuronale Netzwerksystem eine Vielzahl von neuronalen Netzwerkarrays umfasst, jedes der Vielzahl von neuronalen Netzwerkarrays eine Vielzahl von speicherinternen Recheneinheiten umfasst und jede speicherinterne Recheneinheit konfiguriert ist, um einen Gewichtungswert eines Neurons in einem entsprechenden neuronalen Netzwerk zu speichern.

5. Computerlesbares Speichermedium, das Programmcode speichert, wobei, wenn der Programmcode durch das neuronale Netzwerksystem nach Anspruch 4 ausgeführt wird, das neuronale Netzwerksystem dazu veranlasst wird, das Verfahren nach einem der Ansprüche 1 bis 3 durchzuführen.

## Revendications

1. Procédé permettant de traiter des données réalisé par un système de réseau neuronal, le procédé comprenant les étapes consistant à :

• entrer (S1010) des données d'entraînement dans un système de réseau neuronal pour obtenir des premières données de sortie, dans lequel le système de réseau neuronal comprend une pluralité de matrices de réseau neuronal, chacune de la pluralité de matrices de réseau neuronal comprend une pluralité d'unités de calcul en mémoire, et chaque unité de calcul en mémoire est configurée pour stocker une valeur de poids d'un neurone dans un réseau neuronal correspondant, dans lequel une valeur initiale de la valeur de poids est déterminée en réalisant un entraînement hors ligne, dans lequel la pluralité de matrices de réseau neuronal comprend une première matrice de réseau neuronal, une deuxième matrice de réseau neuronal et une troisième matrice de réseau neuronal, dans lequel des données d'entrée de la première matrice de réseau neuronal comprennent des données de sortie de la deuxième matrice de réseau neuronal, et la troisième matrice de réseau neuronal et la deuxième matrice de réseau neuronal sont configurées pour mettre en œuvre en parallèle le calcul d'une couche de convolution dans le réseau neuronal ;
• calculer (S1020) un écart entre les premières données de sortie et des données de sortie cibles ; et
• ajuster (S1030), sur la base de l'écart, une valeur de poids stockée dans au moins une unité de calcul en mémoire dans certaines matrices de réseau neuronal dans la pluralité de matrices de réseau neuronal, dans lequel lesdites certaines matrices de réseau neuronal sont configurées pour mettre en œuvre le calcul de certaines couches de réseau neuronal dans le système de réseau neuronal, dans lequel l'ajustement, sur la base de l'écart, de la valeur de poids stockée dans au moins une unité de calcul en mémoire dans certaines matrices de réseau neuronal dans la pluralité de matrices de réseau neuronal comprend :

> ∘ la division de l'écart en au moins deux sous-écarts, dans lequel un premier sous-écart dans les au moins deux sous-écarts correspond aux données de sortie de la deuxième matrice de réseau neuronal, et un second sous-écart dans les au moins deux sous-écarts correspond à des données de sortie de la troisième matrice de réseau neuronal ;
> ∘ l'ajustement, sur la base du premier sous-écart et de données d'entrée de la deuxième matrice de réseau neuronal, d'une valeur de poids stockée dans au moins une unité de calcul en mémoire dans la deuxième matrice de réseau neuronal ; et
> ∘ l'ajustement, sur la base du second sous-écart et de données d'entrée de la troisième matrice de réseau neuronal, d'une valeur de poids stockée dans au moins une unité de calcul en mémoire dans la troisième matrice de réseau neuronal.

2. Procédé selon la revendication 1, dans lequel la première matrice de réseau neuronal comprend une matrice de réseau neuronal configurée pour mettre en œuvre le calcul d'une couche entièrement connectée dans le réseau neuronal.

3. Procédé selon la revendication 2, dans lequel l'ajustement, sur la base de l'écart, de la valeur de poids stockée dans au moins une unité de calcul en mémoire dans certaines matrices de réseau neuronal de la pluralité de matrices de réseau neuronal comprend :

> ∘ l'ajustement, sur la base de données d'entrée de la première matrice de réseau neuronal et de l'écart, d'une valeur de poids stockée dans au moins une unité de calcul en mémoire dans la première matrice de réseau neuronal.

4. Système de réseau neuronal configuré pour réaliser le procédé selon l'une quelconque des revendications 1 à 3, dans lequel le système de réseau neuronal comprend une pluralité de matrices de réseau neuronal, chacune de la pluralité de matrices de réseau neuronal comprend une pluralité d'unités de calcul en mémoire, et chaque unité de calcul en mémoire est configurée pour stocker une valeur de poids d'un neurone dans un réseau neuronal correspondant.

5. Support de stockage lisible par ordinateur stockant un code de programme, dans lequel, lorsque le code de programme est exécuté par le système de réseau neuronal selon la revendication 4, le système de réseau neuronal est amené à réaliser le procédé selon l'une quelconque des revendications 1 à 3.

FIG. 1

EP 4 053 748 B1

FIG. 2

FIG. 3

$$
\begin{matrix}
W_{0,0} & W_{0,1} & * & * & * & W_{0,n-1} \\
W_{1,0} & W_{1,1} & * & * & * & W_{1,n-1} \\
W_{2,0} & W_{2,1} & * & * & * & W_{2,n-1} \\
W_{3,0} & W_{3,1} & * & * & * & W_{3,n-1} \\
* & * & * & * & * & * \\
* & * & * & * & * & * \\
* & * & * & * & * & * \\
W_{m-1,0} & W_{m-1,1} & * & * & * & W_{m-1,n-1}
\end{matrix}
$$

FIG. 4

FIG. 5

FIG. 6

Manner 1

Manner 2

| Data 1 | Result 1 |
|---|---|
| Data 2 | Result 2 |
| Data 3 | Result 3 |

Complete input

Complete output

Complete input    Data 1    Complete output    Result 1

Complete input    Data 2    Complete output    Result 2

Complete input    Data 3    Complete output    Result 3

• • •    • • •    • • •    • • •

FIG. 7

EP 4 053 748 B1

FIG. 8(a)

A 3 x 3 convolution kernel is used as an example, and slide = 1

First part

Second part

Third part

FIG. 8(b)

FIG. 9

Input training data into a neural network system to obtain first output data — S1010

Calculate a deviation between the first output data and target output data — S1020

Adjust, based on the deviation, a weight value stored in at least one in-memory computing unit in some neural network arrays in a plurality of neural network arrays in the neural network system using parallel acceleration — S1030

FIG. 10

Operation of a forward process: $Y = XW$

Operation of a backward process: $Y = XW^T$

FIG. 11

FIG. 12A

Fully-connected in-memory computing (first memristor array)

W

W

In-situ updating of a conductance weight

FIG. 12B

Second memristor array

Third memristor array

Fourth memristor array

TO FIG. 13B

TO FIG. 13B

TO FIG. 13B

FIG. 13A

CONT. FROM FIG. 13A

CONT. FROM FIG. 13A

CONT. FROM FIG. 13A

Fully-connected in-memory computing
(first memristor array)

In-situ updating
of a conductance
weight

W

W

FIG. 13B

FIG. 14

Plurality of memristor arrays for parallel computing

Second memristor array

Third memristor array

Fourth memristor array

• • •

Residual 1

Residual 2

Residual 3

• • •

Complete residual

Residual output

Shared first memristor array

Residual input

• • •

FIG. 15

In-situ
updating of
a conductance
weight

Second
memristor array

In-situ
updating of
a conductance
weight

Third
memristor array

In-situ
updating of
a conductance
weight

Fourth
memristor array

FIG. 16

FIG. 17

EP 4 053 748 B1

$V_{SET1}$  $V_{SET1}$

$V_{SET2}$

N x M

SET is performed on selected components in parallel, to increase conductances of the components

FIG. 18

RESET is performed on selected components in parallel, to reduce
conductances of the components

FIG. 19

FIG. 20

EP 4 053 748 B1

FIG. 21

EP 4 053 748 B1

Determine, based on neural network information, network layers that need to be accelerated in parallel — S2210

Separately map the initial training weight to network layers accelerated in parallel and a network layer not accelerated in parallel in an in-memory computing architecture — S2220

S2215

Perform offline training on an external PC to determine an initial training weight

S2255

Load a next set of training data

Input a set of training data into the in-memory computing architecture, to obtain an output result of forward computing based on actual hardware — S2225

S2250

Based on a proposed training method for parallel training of an in-memory computing system, perform on-chip in-situ training and updating on conductance weights of parallel acceleration arrays or other arrays through computing such as back propagation

S2245

No

S2240

S2230

Reload a training data set

Yes

Is a last set of training data or not

No

Whether accuracy meets a requirement

Yes

S2235

Training ends

FIG. 22

Neural network system 2300

Processing module 2310

Calculation module 2320

Adjustment module 2330

FIG. 23

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **WANG ZHONGRUI et al.** In situ training of feedforward and recurrent convolutional memristor networks. *Nature Machine Intelligence*, 01 September 2019, vol. 1 (9), 434-442

- Extremely parallel memristor crossbar architecture for convolutional neural network implementation. **YAKOPCIC CHRIS et al.** 2017 INTERNATIONAL JOINT CONFERENCE ON NEURAL NETWORKS (IJCNN). IEEE, 14 May 2017, 1696-1703